# EUROPEAN PATENT APPLICATION

(11) **EP 1 197 889 A1**
(43) Date of publication of application: **17.04.2002**
(21) Application number: 00956982.3
(22) Date of filing: 06.09.2000
(51) Int. Cl.: G06F 17/60

(54) **SCHEDULE COMMUNICATION METHOD, APPARATUS, AND SYSTEM**

(30) Priority: 12.11.1999 JP 32339599; 27.04.2000 JP 2000126884
(71) Applicant: B to C interface Inc, Tokyo 106-0045 (JP)
(72) Inventor: YAMASHITA, Tetsuya, Tokyo 106-0045 (JP)
(74) Representative: Knauthe Paul Schmitt
(86) International application number: JP0006072
(87) International publication number: WO0137155

(57) **Abstract**

A schedule transmission system comprises a schedule transmission device on a client side, and a schedule transmission device on a server side. The schedule transmission device on the server side sends a user a schedule and an advertisement matching with the user's preference. The schedule transmission device on the client side receives the schedule and the advertisement. The advertisement is notified to the user in the manner of being included in the schedule according to its target time.

## Description

### Field of the Invention

The present invention relates to a technique for transmitting a user's schedule. In particular, the present invention relates to a method, apparatus, and system for transmitting and receiving a user's schedule.

### Background of the Invention

In Internet communication which relies on follow marketing, information providers, namely, companies, take initiative inmost of the cases. The providers are required to make a constant effort to enhance attractiveness of their web-contents in order to ensure users' constant access thereto. For such businesses, establishment of direct and intimate relationship with users through distribution of the latest information and so on via electric mails is important in order to accurately ascertain the users' demands and to reflect them in the companies' products.

However, the companies suffer from a limitation that they can best provide information of common interest to major users even though they make an effort to reflect the users' various demands. When the companies provide or distribute detailed information for the minor's satisfaction, on the other hand, excessive information may be resulted. This is, after all, avoided by the users.

Further, although banner advertisements directed to the Internet end users are also popular, the effect of having advertisement directed to unspecified majority is quite suspicious.

### SUMMARY OF THE INVENTION

The present invention has been achieved in view of the above, and accordingly aims to provide a technique for providing a network service capable of accurately ascertaining and providing information desired by an individual user.

Another object of the present invention is to provide a technique for including additional information to a user's schedule when distributing the schedule to the user via a network, for responding the user's various demands.

Still another object of the present invention is to provide a technique for enabling effective distribution of company advertisement via a network.

Yet another object of the present invention is to provide a technique for enabling effective distribution of a company's job information or advertisement via a network.

In order to achieve the above objects, the present invention is configured based on a technique for transmitting a user's schedule via a network. The term "network" used here includes any transmission means, whether wired or radio, capable of data transmission. The term "schedule" used here refers to general individual information, such as a user's individual schedule, which is organized based on a time axis. The term "advertisement" used here refers to general information for use by a company or individual to appeal to the others, as well as publicity, or sales purpose information. The term "job information" used here refers to information, whether paid or for free, for widely looking for a labor, as well as information generally considered as job ad.

According to one aspect of the present invention, there is provided a schedule transmission method for a network system, which is particularly suitable to be used on a user side or a client side. This method comprises : receiving a user' s schedule via a network; receiving an advertisement selected as matching with the user's preference; determining a target time of the advertisement; and notifying the user of the advertisement in a manner of being included in the user's schedule according to the target time of the advertisement. The method may further comprise a step of receiving job information via the network. The term "being included" used here means, for example, being written integrally into a day space in a schedule. According to this method, an advertisement can be notified to a user in the manner of being included into a schedule the user received.

According to another aspect of the present invention, there is provided a schedule transmission method for a network system, which is particularly suitable to be used on a user side. This method comprises : receiving a user's schedule via a network; receiving job information via the network; determining a target time of the job information; and notifying the user of the user's schedule and the job information in a manner that the user's schedule and the job information are correlated to each other according to the target time. According to this method, job information can be notified to the user in the manner of being included in a schedule, for example.

According to still another aspect of the present invention, there is provided a schedule transmission method for a network system, which is particularly suitable to be used on the host side or the server side. This method comprises : sending a schedule to a user via a network; selecting an advertisement matching with the user's preference; and sending the advertisement selected to the user after adding a target time to the advertisement, the target time being referred to when including the advertisement into the schedule. This makes it possible for the user to ascertain the advertisement in the form of being included in the schedule. This method may further include a step of sending job information via the network.

According to yet another aspect of the present invention, there is provided a schedule transmission method for a network system, which is suitable to be used on a server side. This method comprises : sending a schedule to a user via a network; selecting job information to be sent to the user; sending the job information selected to the user after adding a target time to the job information, the target time being referred to when making the job information correlated with the schedule. This method makes it possible for the user to ascertain a schedule, which includes job information.

According to yet another aspect of the present invention, there is provided a schedule transmission method executed in a server-client system. This method comprises : sending a schedule from the server to the user; receiving the schedule on the side of the user; selecting by the server an advertisement matching with preference of the user; sending the advertisement selected, from the server to the user; determining a target time of the advertisement on the side of the user; and notifying the advertisement to the user in a manner of being included into the schedule according to the target time on the side of the user.

According to yet another aspect of the present invention, there is provided a schedule transmission method executed in a server-client system. This method comprises : sending a schedule from the server to the user; receiving the schedule on the side of the user; selecting by the server job information to be sent to the user; sending the job information selected, from the server to the user; receiving the job information on the side of the user; determining a target time of the job information on the side of the user; and notifying the job information to the user in a manner of being correlated to the schedule according to the target time on the side of the user.

Note that there may be provided a computer readable recording medium storing a program for executing the above processes. That program is executed on a computer.

According to yet another aspect of the present invention, there is provided a schedule transmission device for a network system. This apparatus is suitable to be used on a user side. This method comprises: a unit for acquiring a user's schedule via a network; a unit for acquiring, via the network, an advertisement selected as matching with preference of the user; a unit for determining a target time of the advertisement; a notification control unit for notifying the advertisement to the user in a manner of being included into the schedule according to the target time. This apparatus makes it possible for the user to ascertain advertisement in the state of being included in the schedule.

According to yet another aspect of the present invention, there is provided a schedule transmission device, which is suitable to be used on a user side. This system comprises a unit for acquiring a user's schedule via a network; a unit for acquiring job information via the network; a unit for determining a target time of the job information; a notification control unit for notifying the user of the job information in a manner of being correlated to the user's schedule according to the target time. This apparatus makes it possible for the user to ascertain job information in the state of being included in the schedule.

According to yet another aspect of the present invention, there is provided a schedule transmission device, which is suitable to be used on a user side. This apparatus comprises a schedule management unit for reading a schedule to be sent to a user via a network; a search unit for selecting an advertisement matching with preference of the user; and a unit for generating data to be sent to the user by adding a target time to the advertisement selected, the target time being referred to when including the advertisement into the schedule.

According to yet another aspect of the present invention, there is provided a schedule transmission device, which is suitable to be used on a server side. This apparatus comprises a schedule management unit for reading a schedule to be sent to a user via a network; a search unit for selecting job information to be sent to the user; and a unit for generating data to be sent to the user by adding a target time to the job information selected, the target time being referred to when making the job information correlated to the schedule.

According to yet another aspect of the present invention, there is provided a schedule transmission system for a network system including a server system and a client on a side of a user. In this system, the server system comprises a unit for sending a schedule to the user; a unit for selecting an advertisement matching with the user's preference; and a unit for sending the advertisement selected to the user. Meanwhile, the client comprises a unit for receiving the schedule; a unit for receiving the advertisement; a unit for determining a target time of the advertisement; and a notification control unit for notifying the user of the advertisement in a manner of being included into the schedule according to the target time. In addition, the server system may further comprise the server system further comprises a WWW server serving as a front server for communicating with the client via the Internet; and an advertisement server for extracting the schedule and the advertisement according to content of communication with the client to forward to the WWW server. This structure makes it possible to check a schedule in the state of including an advertisement, on the client side, namely, the user side.

According to yet another aspect of the present invention, there is similarly provided a schedule transmission system. In this system, the server system comprises: a unit for sending a schedule to the user; a unit for selecting job information to be sent to the user; and a unit for sending the job information selected to the user. Meanwhile, the client comprises: a unit for receiving the schedule; a unit for receiving the job information; a unit for determining a target time of the job information; and a notification control unit for notifying the user of the schedule and the job information in a manner that the schedule and the job information are correlated to each other according to the target time. This structure makes it possible to check a schedule which is in the state of being associated with job information, on the client side, namely, the user side.

According to yet another aspect of the present invention, there is provided a schedule transmission method. This method comprises : receiving a user's schedule via a network; receiving a title of information segmented via the network; determining a target time of the title received; and notifying the title to the user in a manner of being included in the user's schedule according to the target time. This structure makes it possible to notify the user of information having a relatively large amount, using a title, or a simple symbol. Note that an embodiment of this method in the form of an apparatus is useful as the present invention.

The title is set with an electrical link to an item indicative of the information segmented, so that the item indicative of the information is presented to the user via on-line processing in response to the user clicking the title. Also, at other end of the electric link, there is formed an intensive point for intensively presenting the item indicative of the information to the user.

According to yet another aspect of the present invention, there is provided a schedule transmission method. This method comprises sending a schedule to a user via a network; selecting a title of information segmented; and sending the title selected to the user after adding a target time to the title, the target time being referred to when including the title into the schedule. Note that an embodiment of this method in the form of an apparatus is useful as the present invention.

According to yet another aspect of the present invention, there is provided a schedule transmission method. This method comprises : sending a schedule from the server to the user; receiving the schedule on the side of the user; selecting by the server a title of information segmented; sending the title selected, from the server to the user; determining a target time of the title on the side of the user; and notifying the user of the title in a manner of being including into the schedule according to the target time on the user side.

According to yet another aspect of the present invention, there is provided a schedule transmission system. This system uses a network system including a server system and a client on a side of a user. In this system, the server system comprises:
a unit for sending a schedule to the user; a unit for selecting a title of information segmented to be sent to the user; and a unit for sending the title selected to the user. Meanwhile the client comprises a unit for receiving the schedule; a unit for receiving the title; a unit for determining a target time of the title; and a notification control unit for notifying the user of the title in a manner of being correlated to the schedule according to the target time.

According to yet another aspect of the present invention, there is provided a schedule transmission method for a network system. This method is suitable to be used on a client side. This method comprises : receiving a user' s schedule via a network; receiving a title of information segmented via the network; determining a target time of the title received; and notifying the title to the user in a manner of being included in the user's schedule according to the target time.

According to yet another aspect of the present invention, there is provided a schedule transmission method, which is suitable to be used on a server side. This method comprises sending a schedule to a user via a network; selecting a title of information segmented; and sending the title selected to the user after adding a target time to the title, the target time being referred to when including the title into the schedule.

According to yet another aspect of the present invention, there is provided a schedule transmission method executed in a server-client system. This method comprises : sending a schedule from the server to the user; receiving the schedule on the side of the user; selecting by the server a title of information segmented; sending the title selected, from the server to the user; determining a target time of the title on the side of the user; and notifying the user of the title in a manner of being including into the schedule according to the target time on the user side.

The title is set with an electrical link to an item indicative of the information segmented, so that the item indicative of the information is presented to the user via on-line processing in response to the user clicking the title.

Also, there is formed an intensive point for intensively presenting the item indicative of the information to the user, at other end of the electric link.

It should be noted that any combination of the above described components, and replacement and combination of expressions used in the above descriptions of the above mentioned methods, Systems, apparatuses, recording medium are also useful as an aspect of the present invention.

### BRIEF DESCRIPTION OF THE DRAWINGS

The above described and other objects, features, and advantages of the present invention will be come clear from the description below with reference to the accompanied drawings prepared as follows.
Fig. 1 is a diagram showing a structure of a schedule transmission system in a preferred embodiment;
Fig. 2 is a diagram showing an interior structure of a schedule transmission device on a client side;
Fig. 3 is a diagram showing an interior structure of a user ID information input section shown in Fig. 2;
Fig. 4 is a diagram showing a data stream acquired in the schedule acquisition section shown in Fig. 2;
Fig. 5 is a diagram showing an interior structure of a schedule acquisition section shown in Fig. 2;
Fig. 6 is a diagram showing an interior structure of a target time determination section shown in Fig. 2;
Fig. 7 is a diagram showing a format of data output from a target time determination section;
Fig. 8 is a diagram showing an interior structure of a notification control section shown in Fig. 2;
Fig. 9 is a diagram showing an interior structure of a schedule transmission device on a server side;
Fig. 10 is a diagram showing an interior structure of an individual information acquisition section shown in Fig. 9;
Fig. 11 is a diagram showing an interior structure of an individual information acquisition section shown in Fig. 9;
Fig. 12 is a diagram showing an individual information card;
Fig. 13 is a diagram showing an interior structure of a schedule request receiving section shown in Fig. 9;
Fig. 14 is a diagram showing an interior structure of an authentication section shown in Fig. 9;
Fig. 15 is a diagram showing job information;
Fig. 16 is a diagram showing an advertisement;
Fig. 17 is a diagram showing an interior structure of a relevant information designation section shown in Fig. 9;
Fig. 18 is a diagram showing an interior structure of a search section shown in Fig. 9;
Fig. 19 is a diagram showing a structure of transmission data generated in a transmission data generation section shown in Fig. 9;
Fig. 20 is a diagram showing an interior structure of an accounting management section shown in Fig. 9;
Fig. 21 is a diagram showing an initial screen image to be referred to by a user checking a schedule;
Fig. 22 is a diagram showing an initial screen image to be referred to by a user checking a schedule using a mobile phone;
Fig. 23 is a diagram showing a screen image to be referred to by a user checking a schedule;
Fig. 24 is a diagram showing another screen image to be referred to by a user checking his schedule;
Fig. 25 is a diagram showing still another screen image to be referred to by a user checking a schedule;
Fig. 26 is a diagram showing a screen image to be referred to by a user using a mobile phone;
Fig. 27 is a flowchart of a procedure to be followed by a user checking a schedule;
Fig. 28 is a flowchart of a procedure to display an advertisement when a user checks a schedule;
Fig. 29 is a flowchart of a procedure to display an advertisement when a user checks a schedule; and
Fig. 30 is a flowchart of a procedure to send job information from an advertisement server to a user.

### DETAILED DESCRIPTION OF PREFERRED EMBODIMENTS

The preferred-embodiments described below do not limit the scope of the present invention, which is defined in the accompanying claims, and combinations of the features described below are not all indispensable to the respective means employed in the present invention.

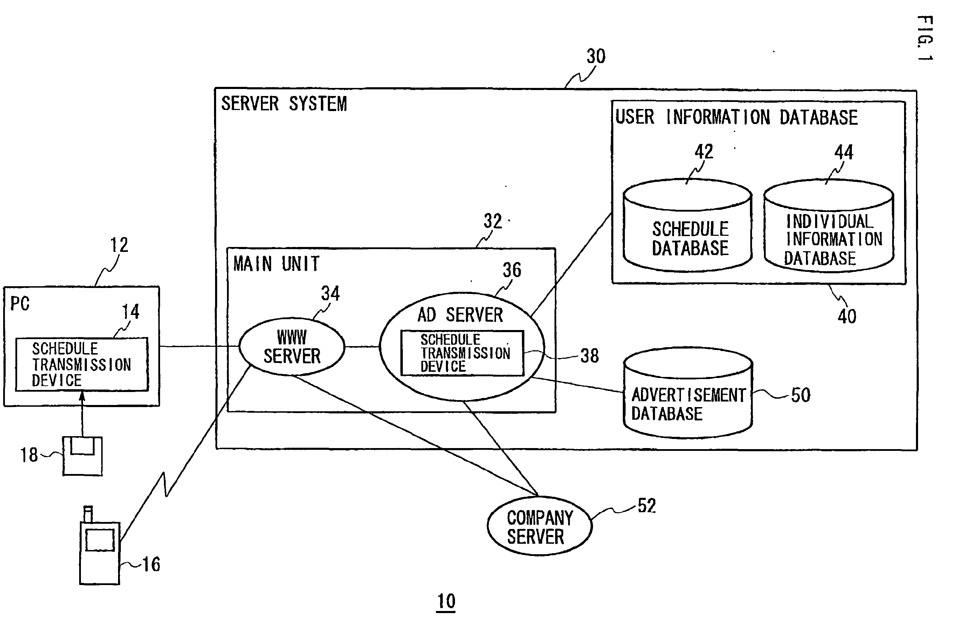

Fig. 1 is a diagram showing a structure of a schedule transmission system according to a preferred embodiment. In this system, the server manages a user's schedule, while a user accesses the server to *know* his own schedule. Upon a user's access, the server presents to the user an advertisement or company's job information suitable for the user in the manner allowing incorporation into the schedule to be provided to the user.

The schedule transmission system 10 comprises a server system 30, a personal computer (PC) 12, which serves as a user client system, and a company server 52. Note that the client system is not necessarily a PC 12, and may instead be a personal phone 16 or any other types of information terminals.

The main functions of the server system 30 are transmission of a schedule to a user, selection of an advertisement matching with a user's preference, and transmission of the selected advertisement to a user. The server system 30 further has a function for selecting job information to be sent to a user, and that for sending the selected job information to the user. The main functions of the client are reception of a schedule sent, reception of an advertisement and job information sent, determination of a target time of the advertisement and the job information received, notification of the advertisement in the manner of being included in the schedule according to the target time, and notification of the job information in the manner of being associated with the schedule according to the target time. The term "target time" used here refers to a time somehow related to an advertisement and job information, such as a day and time when an advertised event takes place or when the job concerning job information is required.

The client or the PC 12 includes a schedule transmission device 14 according to this preferred embodiment. The schedule transmission device 14 is realized mainly by means of a program loaded in the CPU and memory of the PC 12, though it may also be realizable through combination of any other types of hardware and software. A person skilled in the art may easily appreciate high freedom in designing. For realization of a schedule transmission device 14 in the form of a group of software modules, this program may be loaded to the PC 12 using a recording medium, such as a floppy disk 18, and so on.

The server system 30 comprises a main unit 32, a user information database 40, and an advertisement database 50. The main unit 32 comprises a www server 34 and an advertisement server 36. The www server 34 serves as a front server for communication with a client via the Internet. The advertisement server 36 extracts schedule information, advertisement, and job information from the user information database 40 according to the content of communication with the client and forward them to the www server 34. The advertisement sever 36 includes a server-side schedule transmission device 38 according to the preferred embodiment. Alternatively, the schedule transmission device 38 may be partially or entirely included in the WWW server 34. Here again, high freedom in designing is appreciated.

The user information database 40 comprises a schedule database 42 and an individual information database 44. The schedule database 42 stores a user's schedule. The individual information database 44 stores a user's individual information.

The advertisement database 50 stores a company's advertisement, which is provided, for example, via the main unit 32 of the company server 52 or through off-line processing.

The company server 52 has a home page function, in addition to a server function for sending an advertisement to the main unit 32, for presenting a home page of a company which a client accessed to inquire detailed information on an advertisement.

In the above described structure, mainly a user's schedule is transmitted between the server and the client. In this system, an advertisement and job information are additionally transmitted for presentation to the user in the manner of being included in the schedule. Moreover, matching between an advertisement and a user and that between job information and a user may be verified in advance so that an advertisement can be sent to a user with the highest advertisement effect expected and that job information can be sent to a user most preferable for the company to hire. Also, a user can effectively receive, without making any effort, an advertisement most interesting to him and job information on a job he would like to work.

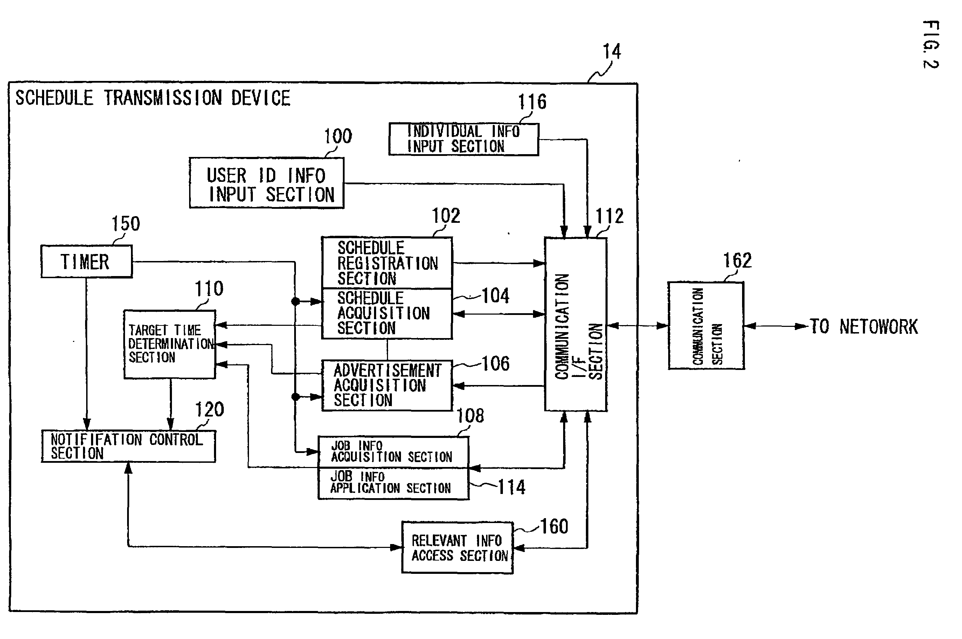

Fig. 2 is a diagram showing a structure of a client-side schedule transmission device 14. A user ID information input section 100 stores information for use in identification of a user attempting to access a schedule. A schedule registration section 102 is used by a user attempting to register or update a schedule by himself. A schedule acquisition section 104 is used by a user attempting to check a schedule by himself. A schedule acquired by the schedule acquisition section 104 is sent to a target time determination section 110.

The target time determination section 110 determines a target time of the schedule acquired. For a schedule "travel for one week from January 1", for example, the target time may be determined as either "January 1" or "one week from January 1". Schedule and its target time are sent to a notification control section 120.

The notification control section 120 conducts various controls for notification to a user of the content of a schedule and its target time. For a schedule "a concert on October 10", the notification control section 120 controls the display to first show a calendar of days around October 10 and then a note "concert" in a space for the day, or a day space, of October 10.

An advertisement acquisition section 106 acquires a company's advertisement from the server system 30. A job information acquisition section 108 similarly acquires job information. Classified information may be made receivable only by a pre-selected user. Advertisement and job information are both forwarded to the target time determination section 110, where their target times are determined. The result of determination is sent to the notification control section 120. For an advertisement "20% off bargain sale at XXX department store on November 10", the notification control section 120 controls the display to first show a calendar of days around November 10 and then a note "a 20% off bargain sale at XXX department store" in a day space for November 10. Similarly, for job information "part time job available at construction site on December 10", the notification control section 120 controls the display to first show a calendar of days around December 10 and then a note "part time job at construction site" at a day space for December 10.

A relevant information access section 160 is used by a user interested in an advertisement or job information displayed and wishing to know detailed information thereabout. Specifically, the user may click an underlined part in the advertisement or job information, which is displayed under the control of the notification control section 120. Then, the relevant information access section 160 detects the user's action of clicking and accesses the detailed information.

A timer 150 is used for acquisition of a schedule, advertisement, and job information at a predetermined time or with a constant interval. For example, it is possible to control the schedule transmission device 14, which is generally used through off-line processing, so as to be connected to a network for every five minutes by dialing up for acquisition of advertisement. The timer 150 can be realized by means of polling effected by a software or a real time clock IC. An output of a real time clock IC, when used, may be utilized for calendar display under the control of the notification control section 120.

A job information application section 114 is used by a user wishing to apply for job information he received. In actuality, an "application" button may be displayed together with job information. When the user clicks the button, the job information application section 114 ascertains that fact and informs the server system 114 of that fact.

An individual information input section 116 is used by a user attempting to input his individual information, such as name and address.

A communication I/F section 112 serves as an interface between a communication section 162 and the schedule transmission device 14. The communication section 162 may be any communication function block, such as a modem pre-installed to the PC 14, a LAN circuit, and an optical communication circuit. The communication I/F section 112 converts data held in the schedule transmission device 14 so as to be suitable for data exchange between the communication section 162 and the network. Alternatively, the communication section 162 may have the function of the communication I/F section 112. In such a case, the schedule transmission device 14 does not need to have a communication I/F section 112.

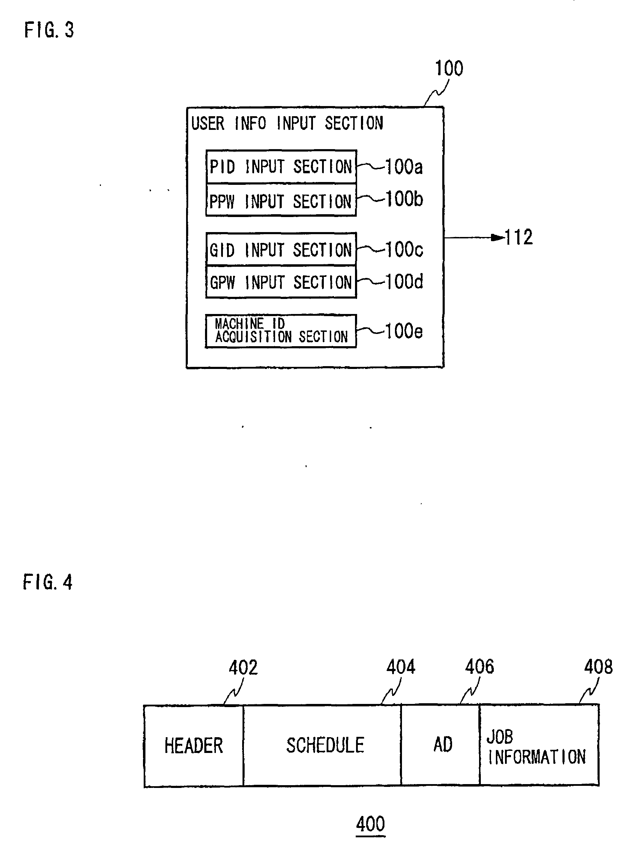

Fig. 3 is a diagram showing a structure of a user ID information input section 100. A PID input section 100a is used to input an ID for use in authentication of a user as an individual. A PPW input section 110b is used to input a password for use in authentication of a user as an individual. A GID input section 100c is used to input an ID for use in authentication of a user as a member of a group. A GWP input section 100d is used to input a password for use in authentication of a user as a member of a group.

This embodiment can authenticate a user not only as an individual but also as a member of a group. This makes it possible to share schedule information among a group of friends, for example, who have common group ID and password.

The user ID information input section 100 further has a machine ID acquisition section 100e for acquiring an ID, such as a CPU serial number of the PC 12, which is unique to a machine. A user having a machine ID, for example, does not need to input a user ID. A variety of modified techniques may be employed to improve a user's convenience and security through combination of a machine ID and a general individual ID or password.

Fig. 4 is a diagram showing a structure of a data stream 400 sent from the server system 30. A data stream 400 includes a header 402, a user schedule 404, an advertisement 406 selected as matching with a user's preference, and job information 408 selected as matching with a user's preference and skill. Alternatively, the data stream may contain one or more of the user schedule 404, the advertisement 406, and the job information 408.

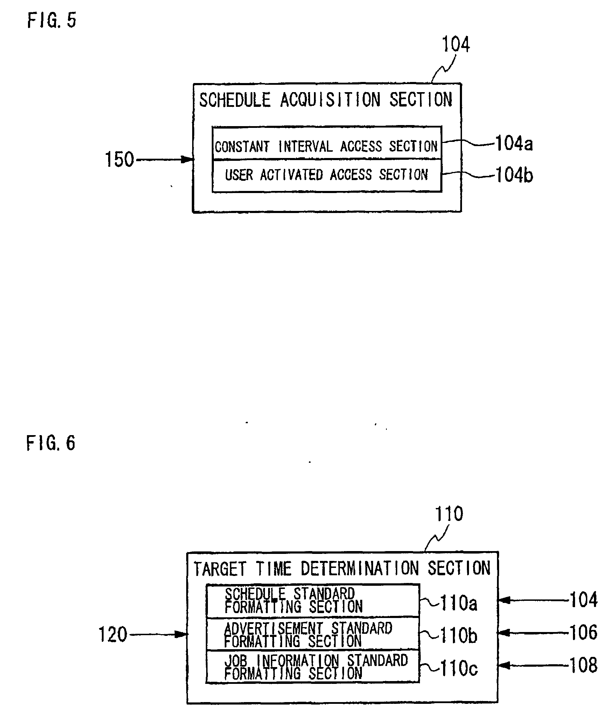

Fig. 5 is a diagram showing an interior structure of the schedule acquisition section 104. A constant interval access section 104a activates an access to schedule, advertisement, or job information at a constant interval based on an output from the timer 150, described above. A user-activated access section 104b activates actual acquisition of a schedule in response to a user's explicit instruction to access a schedule and so on. Note that the advertisement acquisition section 106 and the job information acquisition section 108 may access corresponding information either in a predetermined interval or in response to a user's instruction. Alternatively, advertisement or job information may be acquired when a user requests schedule registration, when a schedule is actually registered, when a user acquires a schedule, and so on.

Fig. 6 is a diagram showing an interior structure of the target time determination section 110. A schedule standard formatting section 110a ascertains the content of the schedule 404 in the data stream 400 sent from the server system 30, and puts the schedule content and its target time into a predetermined data format.

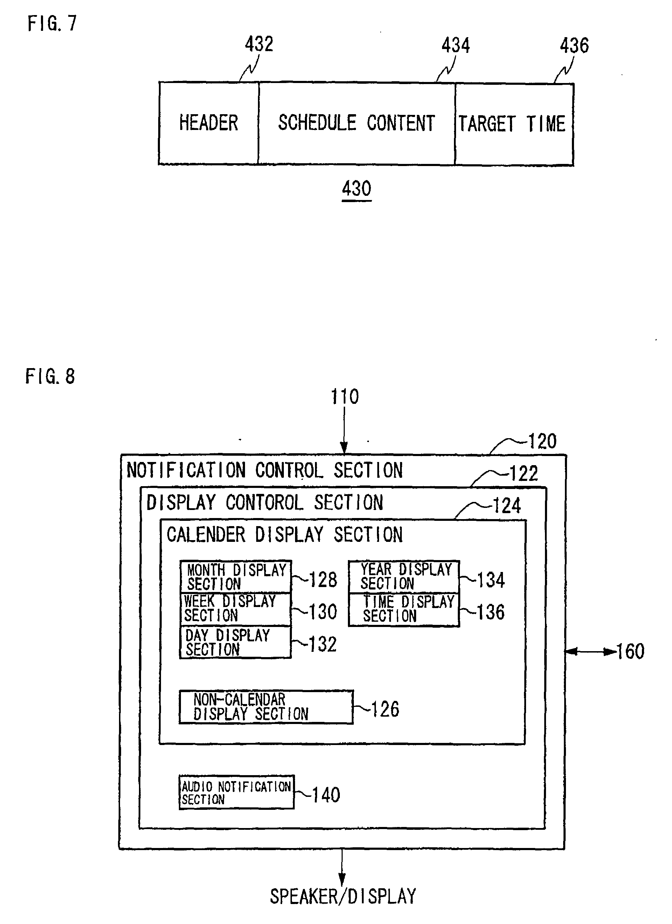

Fig. 7 is a diagram showing a format 430. This format 430 contains a header 432, a schedule content 434, and a target time 436 of the schedule. An advertisement standard formatting section 110b and a job information standard formatting section 110c put an advertisement and job information, respectively, into a predetermined data format, similar to that shown in Fig. 7. These three types of formatted data are sent to the notification control section 120.

Fig. 8 is a diagram showing an interior structure of the notification control section 120. The notification control section 120 mainly comprises a display control section 122 and an audio notification section 140. The display control section 122 includes a calendar display section 124 and a non-calendar display section 126.

The calendar display section 124 displays a schedule in the form of being included in a calendar. When displaying a schedule, an advertisement and job information are also displayed in the manner of being included in or made associated with the calendar. The calendar display section 124 includes a month display section 128, a week display section 130, a day display section 132, a year display section 134, and a time display section 136. The month display section 128 causes an advertisement having a target time expressed in units of month to be included into the display of a schedule in a corresponding month. Similarly, the week display section 130 causes an advertisement having a target time expressed in units of week, into the display of a schedule in a corresponding week. The day display section 132, the year display section 134, and the time display section 136 conduct similar processing.

Two or more of these display sections may operate together. Specifically, for a target time "one week from November 27, 1999", the month display section 128, the week display section 130, the day display section 132, and the year display section 134 may all operate together. The above description concerning processing with advertisement can be similarly applied to job information.

The non-calendar display section 126 displays a user's schedule, advertisement, job information, and so on, in any form, such as a memorandum, other than a calendar. The calendar display section 124 and the non-calendar display section 126 may operate together. For example, a schedule may be shown being included in a calendar, while job information may be described outside of the calendar.

The audio notification section 140 conducts processing for audio notification of a user's schedule, advertisement, job information, and so on. Specifically, a schedule may be notified through an output of an audio message "Tokyo station at 10 a.m. today", and so on. Any known technique may be utilized for audio output of text data, such as a message, which , however, is not described here.

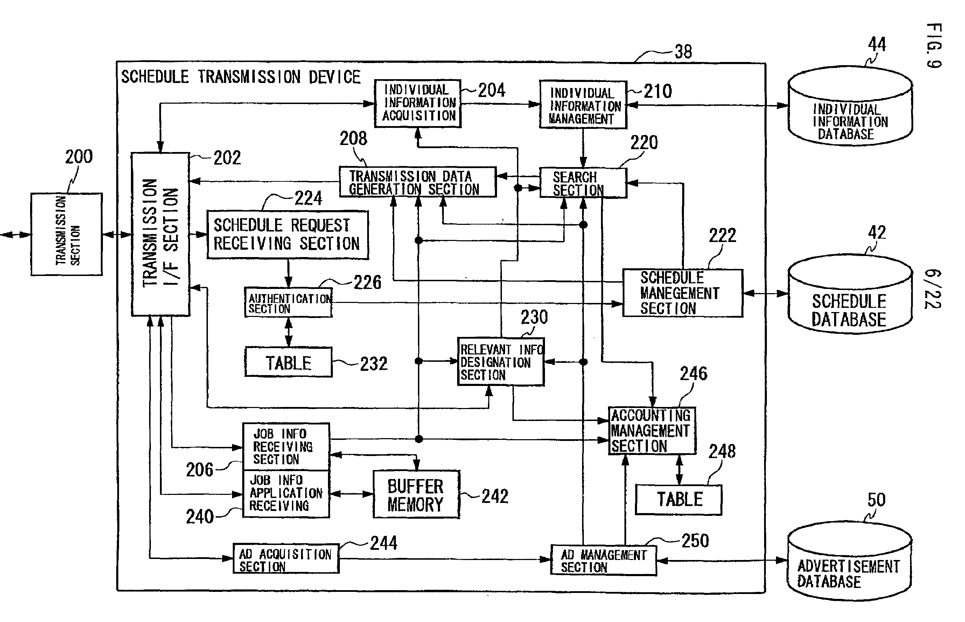

While a client schedule transmission device 14 in a PC 12 on a client side has a structure described above, a schedule transmission device 38 in the advertisement server 36 of the server system has an interior structure shown in Fig. 9.

A transmission section 200 is any transmission function of the advertisement sever 36. A transmission I/F section 202 serves as an interface between the transmission section 200 and the schedule transmission device 38. As described above, the transmission I/F section 202 may be incorporated into the transmission section 200.

A schedule request receiving section 224 receives a schedule-related request from a user. The received request is sent to an authentication section 226 together with the user's ID information. The authentication section 226 authenticates the user with reference to the combinations of IDs and passwords listed in the table 232. When the user is duly authenticated, the user's schedule-related request is sent to the schedule management section 222, which controls data reading and writing with respect to the schedule database 42. In the case where the user's request is one for requesting schedule check, a schedule associated with the user is read from the schedule database 42, and sent to the transmission data generation section 208. The data generation section 208 converts the user's schedule into a data stream 400, shown in Fig. 4, and sends to the user via the transmission I/F section 202 and the transmission section 200.

An individual information acquisition section 204 acquires individual information, which was input via the individual information input section 116 of the schedule transmission device 14 on the client side, shown in Fig. 2. The acquired individual information is sent to the individual information management section 210, which controls data reading and writing with respect to the individual information database 44. The data read from the individual information database 44 may be sent also to the search section 220, if necessary.

An advertisement acquisition section 244 acquires an advertisement from the company server 52 and so on. The advertisement may or may not have a target time. With no target time included, the advertisement acquisition section 244 requests the company server 52 and so on to send such information. An advertisement and target time information are sent to the advertisement management section 250, which controls data reading and writing with respect to the advertisement database 50. Data from the advertisement database 50 may be sent to the search section 220 and the accounting management section 246, if necessary.

A job information receiving section 206 acquires job information from the company server 52 and so on. Acquired job information is stored in a buffer memory 242. Acquired job information is sent to the transmission data generation section 208 and the accounting management section 246. The transmission data generation section 208 generates data necessary to send job information to a user selected by the search section 220, described later. A job information application receiving section 240 receives application for job information sent to a user. Received application is stored in the buffer memory 242.

A relevant information designation section 230 conducts processing to effect a user's access to information relevant to the advertisement or job information the user received. The relevant information designation section 230, which can ascertain what advertisement or job information the user was interested in, provides such information to the search section 220. Such information is also sent to the accounting management section 246 because the fact that a user has accessed relevant information can be used as an evidence of the fact the schedule transmission device 38 has successfully sent appropriate advertisement or job information to an appropriate user. Based on the information, a ccntingent fee is charged.

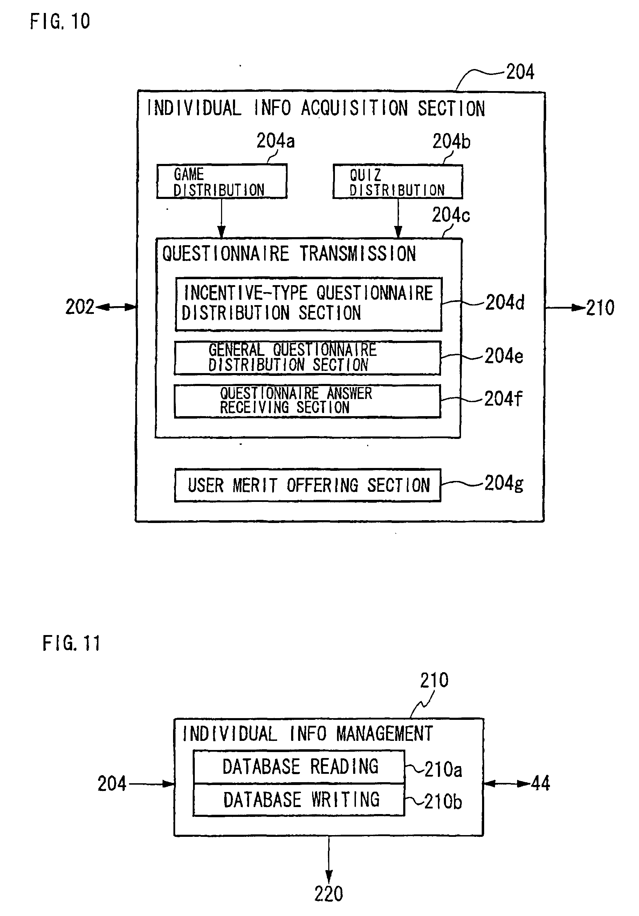

Fig. 10 is a diagram showing an interior structure of the individual information acquisition section 204. A game distribution section 204a distributes game software to a client via a network. A quiz distribution section 204b similarly distributes a quiz to a client. A questionnaire transmission section 204c includes an incentive-type questionnaire distribution section 204d, a general questionnaire distribution section 204e, and a questionnaire answer receiving section 204f.

The incentive-type questionnaire distribution section 204d distributes an incentive-type questionnaire to a user who did a good job with a game distributed from the game distribution section 204a. An incentive-type questionnaire is a questionnaire prepared for the purpose of giving a good or prize, through on or off-line processing, to a user who did a good job with a game, in exchange for user information provided by the user himself including address, name, age, profession, hobby, work place, favorite sport, music, movie, magazine, sport team, town, and food, information on his life style, country he wishes to visit, and so forth. Similar questionnaire may be sent to a user who gave a right answer to or did a good job with a quiz.

A user merit offering section 204g offers user merit in a variety of forms, such as a prize or a good. In this embodiment, a merit in connection with the use of a network, for example, may be presented to a user, such as deduction of a transmission fee, freeware software of music, game, and so on, provision of various network services from a company server 52 for a discounted fee, recognition as a game or quiz winner via a network, and so forth.

Meanwhile, the general questionnaire distribution section 204e distributes general questionnaire prepared for the purpose of asking a user to provide information necessary to initiate schedule transmission service according to the preferred embodiment, as well as other types of questionnaires which do not particularly offer an incentive or merit.

The questionnaire answer receiving section 204f receives a user's answer or reply to an incentive-type or general questionnaire. The reply is sent via the individual information management section 210 to the individual information database 44 to be stored therein. These questionnaires, in particular, incentive-type questionnaires, can create a situation in which a user voluntarily provides his detailed individual information. This enables segmentation of users based on their preferences.

Fig. 11 is a diagram showing an interior structure of the individual information management section 210. A database reading section 210a reads necessary user information from the individual information database 44. The information read is sent to the search section 220. A database writing section 210b writes individual information from the individual information acquisition section 204 into the individual information database 44.

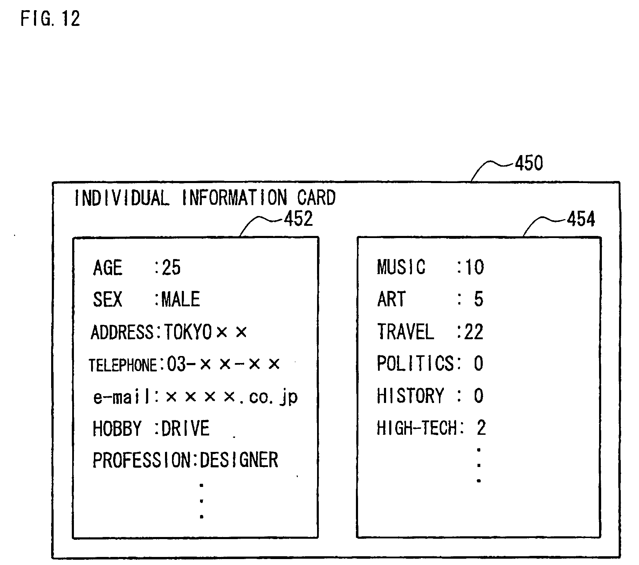

Fig. 12 is a diagram showing a structure of an individual information card 450 prepared for each user and stored in the individual information database 44. This card 450 has a first section 452 for storing individual information known from a user's reply to a questionnaire, and a second section 454 for storing information acquired in the relevant information designation section 230, described later. The first area 452 stores information including a user's name, address, and so on, described above, while the second area 454 stores the content, or a genre, of relevant information the user has accessed and the number of accesses, or access frequency. The user's preference can be learnt from the content of the relevant information he has accessed and access frequency.

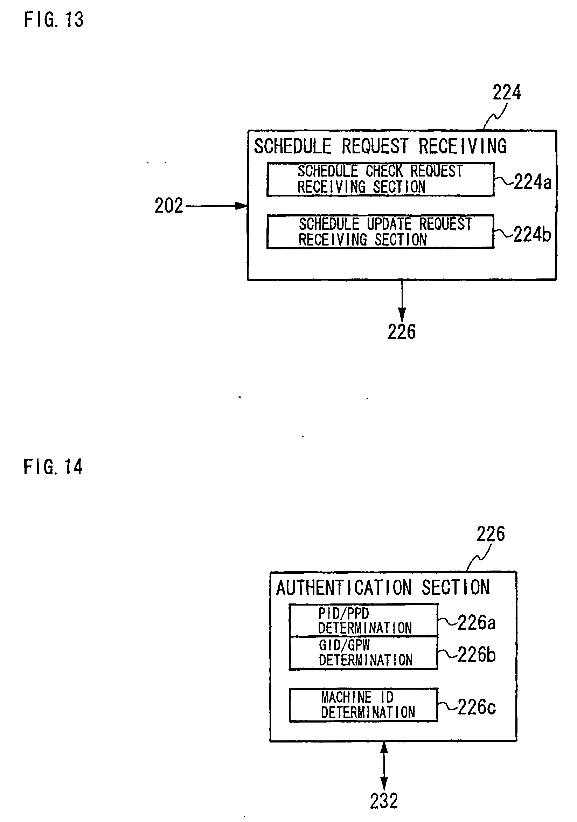

Fig. 13 is a diagram showing an interior structure of a schedule request receiving section 224. A schedule check request receiving section 224a receives a user's request for checking his schedule. The schedule update request reception section 224b receives a user's request for registering or updating his schedule. Here, note that terms "registration" and "updating" of a schedule are included in "writing" of a schedule, with no technical difference in meaning between these terms.

Fig. 14 is a diagram showing an interior structure of an authentication section 226. A PID/PPW determination section 226a determines consistency between an individual ID and a password both provided by a user as individual ID information. A GID/GPW determination section 226b determines consistency between an ID and a password both provided by a user as a member of a group. These two determination sections determine whether or not the ID-password combination is correct with reference to the combinations listed in the table 232. Informed of a user's machine ID, a machine ID determination section 226c determines consistency and so on between a user's password and the machine ID. When the user is rightfully authenticated, the user's information, such as name and ID, is sent to the schedule management section 222 for allowing the user to check or update his schedule.

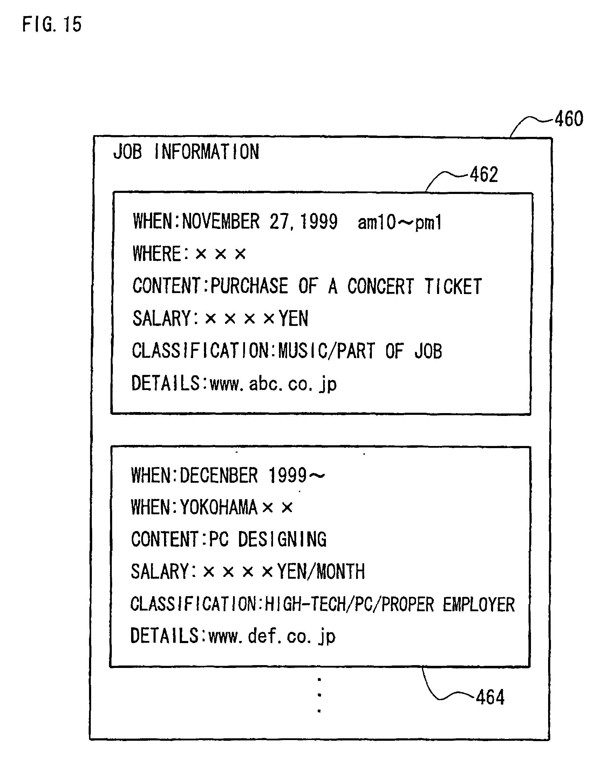

Fig. 15 is a diagram showing job information 460 sent from the company server 52. The job information 460 is received in the job information receiving section 206, and temporarily stored in the buffer memory 242. Classified information 460 includes a desired number of job information pieces. In the drawing, a first job information 462 relates to recruitment of a person to queue for ticket purchase, and a second job information 464 relates to recruitment of a proper employee to work for PC designing. Both information pieces include an URL and so on of the company's home page, which provides detailed information concerning a target time, a place of work, content and genre of the job, salary, and so on. A target time may be a starting time or day, a work period, a work hour, and so on.

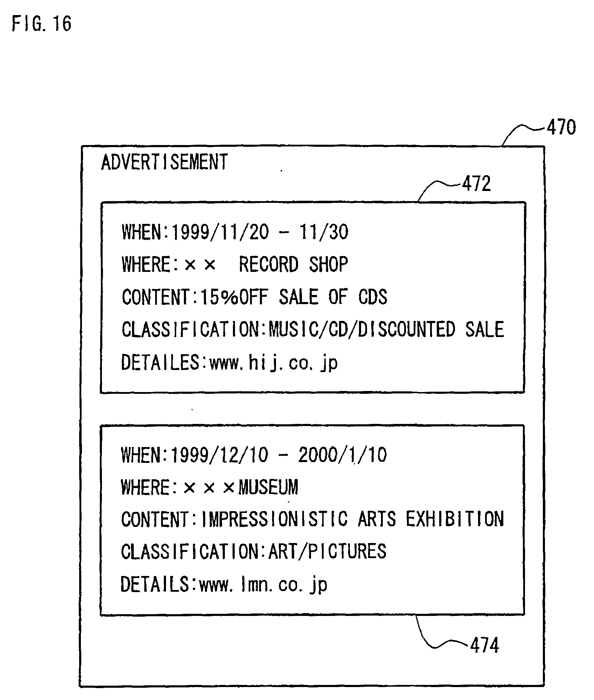

Fig. 16 is a diagram showing an advertisement 470 sent from the company server 52 and received in the advertisement acquisition section 244. The advertisement 470 includes a desired number of advertisement items. In the drawing, a first item 472 relates to a discount sale at a record shop, and a second item 474 relates to a special exhibition at a museum. Both advertisements include an URL and so on, so that a reader wishing to know further information, such as a period of time, a target time, a place where the advertised event takes place, advertised content, content and genre of the event, and other details on the event, can access.

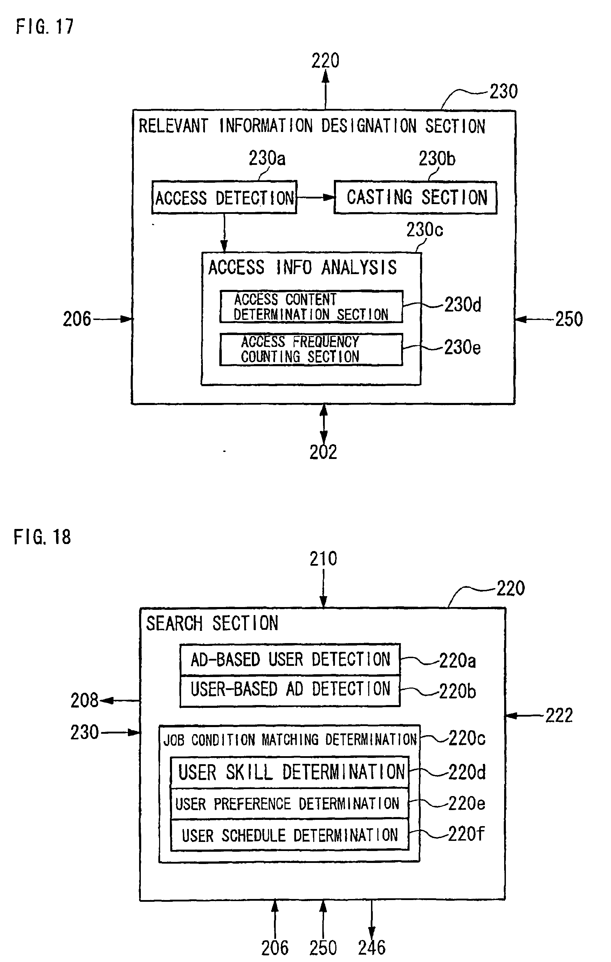

Fig. 17 is a diagram showing an interior structure of the relevant information designation section 230. When a user presses a button, and so on, not shown, displayed on the screen and so on of the PC 12, in order to obtain relevant information of the advertisement and job information, namely, detailed information here, an access detection section 230a detects this action. Upon detection of that fact, a casting section 230b casts the user's access to a company server 52 or a company's home page which holds the relevant information.

Meanwhile, an access information analysis section 230c comprises an access content determination section 230d and an access frequency counting section 230e. The access content determination section 230d determines the content of the relevant information a user clicked for. The access frequency counting section 230e counts the total number of accesses from a user to other relevant information having similar content. The content of relevant information may be any classification, such as genre, field, category, and so on, for indexing the relevant information.

The thus analyzed content of relevant information and the number of accesses are described in the second area 454 of the individual information card 450, shown in Fig. 12. In the example shown, the user has accessed music-related information ten times and art-related information five times. In this manner, the content of relevant information which the user has accessed and the number of accesses are listed. The information obtained by the access information analysis section 230c is forwarded to the individual information acquisition section 204, where an individual information card 450 is prepared. Alternatively, an individual information card 450 may include only the first area 452. In this case, information acquired by the access information analysis section 230c is sent directly to the search section 220. A person skilled in the art may readily appreciate a variety of methods for managing or storing such information.

Fig. 18 is a diagram showing an interior structure of a search section 220. The search section mainly has a search function in association with advertisement and a search function in association with job information. As a search function in association with advertisement, an advertisement-based user detection section 220a and a user-based advertisement detection section 220b are provided.

The advertisement-based user detection section 220a first determines an advertisement which a company wishes to distribute to a user, and then selects a user who may be suitable for that advertisement. User selection is made utilizing the individual information card 450. For an advertisement concerning a bargain sale at a department store, for example, a user who is keen about shopping may be selected. For an advertisement concerning a bargain sale of music CDs, a user who is interested in music may be selected. For an advertisement concerning a bargain sale in Yokohama, a user who is around Yokohama may be selected. User selection may be made utilizing either the first area 452 or the second area 454, or based on combination of any items included in the respective areas. In either case, the advertisement-based user detection section 220a selects a user based on an advertisement, who has a preference or taste matching with or could be interested in the advertisement.

Meanwhile, the user-based advertisement detection section 220b first determines a user, and then selects an advertisement appropriate for that user. The individual information card 450 is utilized also in this manner of selection. Specifically, for selection of an advertisement appropriate for a user having the individual information card 450, shown in Fig. 12, it is learnt from the card 450, that the user has a hobby of driving and has often accessed information concerning music or travel. Therefore, any items concerning "driving", "music", "travel", and so forth or any items containing related terms are selected from among the plurality of items 472, 474, and so on, in the advertisement 470, shown in Fig. 16. When the item 472, 474, and so on has an information record "category", as shown in Fig. 16, the content of the "category" may be referred to in selection of advertisements.

Further, the user-based advertisement detection section 220b can select an advertisement which the user may be interested in, with reference to the user's profile information, such as age, address, and profession, as the user's consumption tendency can be estimated to some extent based on his profile. This manner of selection utilizing a user's profile can be used also by the advertisement-based user detection section 220a.

Meanwhile, selection of job information is made in a job condition matching determination section 220c, which comprises a user skill determination section 220d, a user preference determination section 220e, and a user schedule determination section 220f. The user skill determination section 220d selects a user having a skill matching with the condition explicitly or implicitly mentioned in job information.

Referring to Fig. 15, as the job information 460 describes, in the second item 464, PC designing as the content of the job, users who have ever engaged in a job such as PC designing, information device development, and so forth, are first selected. Then, should a preferable age or required qualification be additionally described, users who can also meet such a condition are selected. Alternatively, a key word for use in a user search may be determined in advance by the company which has prepared the job information.

The user preference determination section 220e selects a user whose preference matches with the genre of the job. Specifically, for a music-related part time job, as described in the first item 462 of the job information 460, shown in Fig. 15, a user who could be interested in music is initially selected with reference to the individual information card 450.

The user schedule determination section 220f selects a user suitable in view of the target time of job information. Specifically, a user who has no schedule planned at the time of the target time of the job information is selected prior to other users. For this purpose, the user schedule determination section 220f accesses the schedule database 42 via the schedule management section 222. Note that the user schedule determination section 220f may conduct user selection only with respect to a job with a relatively short work period because, even though a company wants a human resource on a long time basis, such as a person who can work as a proper employee, not many users may be available who have no schedule for such a long time period that can meet the condition.

As described above, the search section 220 can narrow down the candidates for users to be addressed by an advertisement, to those with a relatively high effect expected before actual transmission of the advertisement, so that the advertisement can be intensively sent to those users. Also, in view of the users, as most of the advertisements distributed to them are relatively interesting, they has less risk of losing a type of information they want in a flood of information.

As for job information, the operation of the condition matching determination section 220c can reduce the burden of a company in applicant selection. The user skill determination section 220d can partially conduct applicant selection based on paper on behalf of the company. In view of the users, as presented with a job appearing interesting and required during a period when they have no particular schedule, they can efficiently receive job information on a suitable job.

That is, the search section 220 offers an advertisement and job information screening function to users, and, at the same time, a screening function for achieving effective marketing and securing human resources to companies. Moreover, presentation of such an advertisement and job information in the form of being linked to a user's schedule can effectively improve the convenience for the user to utilize the information. That is, this embodiment can produce a result remarkably important to the companies in the modern world, where efficient and prompt securement of mobile labor is critical for them to survive.

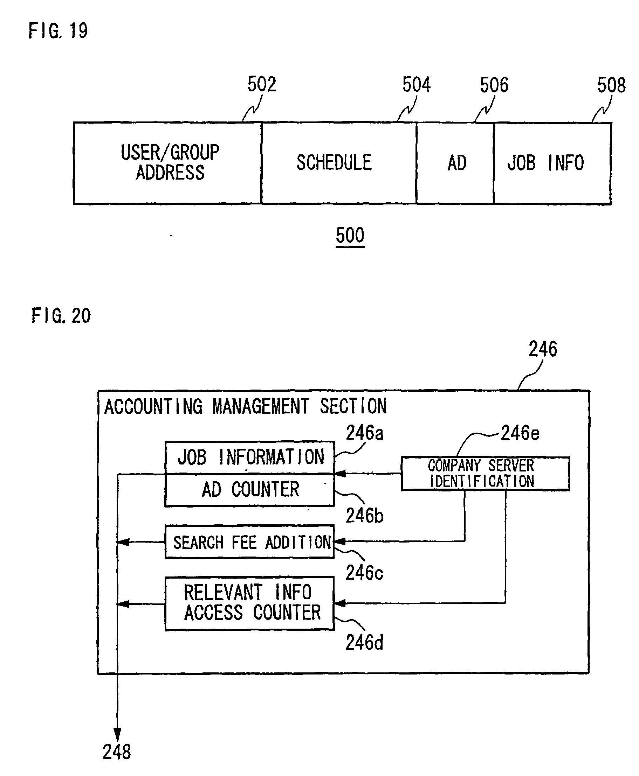

Fig. 19 is a diagram showing transmission data 500 generated in the transmission data generation section 208. Transmission data 500 includes a user/group address 502, which is a part of a header, a schedule 504, an advertisement 506, and job information 508. The user/group address 502 is an address of a user or a group who should be supplied with the schedule 504 and so on, and specified by the transmission section 200. A group address may not necessarily be a separate address from those of the individual users, and may be a collection of the addresses of the plurality of users belonging to that group. The schedule 504, the advertisement 506, and the job information 508 are prepared so as to each include a target time, though the transmission data generation section 208 does not necessarily prepare a schedule 504 and so on so as to contain a target time. In the latter case, the target time determination section 110 of the client-side schedule transmission device 14 may inquire a target time of a schedule 504 containing no target time via the schedule acquisition section 104. That is, final determination of a target time may be made by both transmission data generation section 208, and the schedule acquisition section 104 and the target time determination section 110 on the client side.

Fig. 20 is a diagram showing an internal structure of the accounting management section 246. Fees are charged to a company which requested distribution of advertisement or job information to users in this embodiment. A company server identification section 246e specifies a server of a company which requested distribution of job information or advertisement. Accounting information is prepared in a table 248 for every company server specified.

A job information counter 246a counts the number of job information pieces requested by a company server to distribute or that of job information items included in each job information piece. Likewise, the advertisement counter 246b counts the number of advertisements requested by a company server to distribute or that of the advertisement items included in an advertisement. The respective counter values are multiplied by corresponding unit rates whereby accounting information is prepared.

In the case where a company requested a user selection using the search section 220, a search fee is also added according to the content of the search and the number of searches conducted in this embodiment. This calculation is made in a search fee addition section 246c. For example, the number of conditions applied in user selection may be multiplied by a unit rate to thereby calculate an amount of fee to be added. Alternatively, an amount of fee to be added may be calculated based on a period of time required to complete a search, and so on. Obviously, high freedom in designing is appreciated.

An accounting management section 246 further includes a relevant information access counter 246d. This counter records the number of accesses from a user having received an advertisement or job information, to its relevant information. As the more number of times the user has accessed such information, the larger interest in that information the user may have, a contingent fee is added accordingly, as described above. All those fees are summed up, and the total amount is stored in the table 248 of the concerned company.

In the following, schedule transmission and distribution of accompanying advertisement and job, which are applied by the schedule transmission system 10, will be describe.

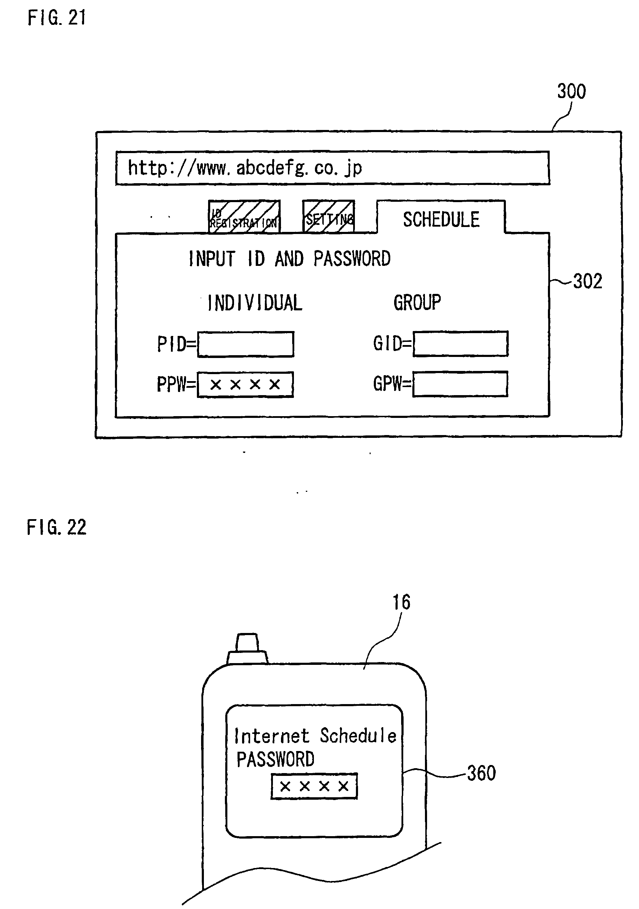

Fig. 21 is a diagram showing an initial screen image 300, appearing on the display of the PC 12 when a user attempts to check a schedule. An individual identification information input screen 302 is displayed here, which is used by a user attempting to check a schedule. A user wishing to access his individual schedule inputs his own ID (PID) and password (PPW), while a user wishing to access a schedule of a group to which the user belongs inputs a group ID (GID) and a group password (GPW).

Fig. 22 is a diagram showing an initial screen image 360, appearing when a user attempts to check a schedule using his mobile phone 16. When a mobile phone is used, the individual ID can be specified by the contract number, or the telephone number, of the phone. Therefore, the user is required to input only a password here. A single window for inputting a password is shown in the drawing, though a group password may be similarly input. In the following, a-case where a user uses a PD 12 will be mainly described as there is no essential difference between cases where a PC 12 is used and where a mobile phone 16 is used.

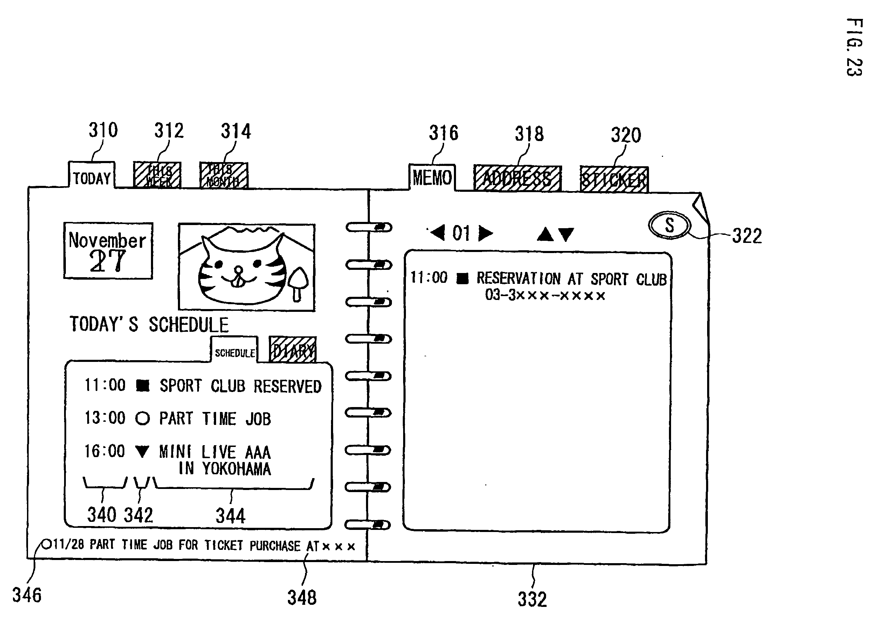

Fig. 23 is a diagram showing a schedule appearing after a user was rightly authenticated. The schedule display screen image 332 is switchable by the action of the display control section 122 of the notification control section 120, among today's, this week's, and this month's schedules. This switching is achieved using a "today" tab 310, a "this week" tab 312, or a "this month" tab 314.

The schedule shown in Fig. 23 is today's schedule. The image displayed on the left half of the schedule display screen image 332 relates to chronologically arranged schedules items. The image displayed on the right half of the schedule display screen image 332 relates to complimentary information concerning the schedule. For displaying on the right half, a memorandum screen image, a friend's address screen image, and a sticker sheet screen image, for example, are selectable. A sticker sheet contains various marks for attachment to any part on a schedule book. The selection is achieved using a "memorandum" tub 316, an "address" tub 318, and a "sticker" tub 320.

When "today's schedule" is selected for the left half, today's date, namely, November 27 here, is displayed, as well as today's schedule displayed below the date. The space where today's schedule is described comprises a target time column 340, a symbol column 342, and a schedule content column 344. In the symbol column 342, where symbols each stand for each schedule item are displayed, three kinds of symbols, namely, rectangular, triangular, and circular symbols, are shown here. A rectangular symbol may stand for a private schedule, a circular symbol may stand for a work schedule, and a triangular symbol may stand for an advertisement sent by a company. It is learnt, in the shown example, that the user has a reservation at a sport club at eleven, and a part time job at thirteen. The note "AAA's mini live in Yokoyama" shown in the time part for sixteen is an advertisement selected as it would appeal to the user. The user in this example may possibly belong to a fan club of a rock'n'roll group called "AAA". Such an advertisement is incorporated into the user's schedule according to the target time, and displayed.

Outside the space for "today's schedule" is shown a memo "job available for ticket purchase at XXX on November 28". This is job information selected as it would be interesting to the user or is required at time when the user has no particular schedule planned. A circular 346, attached to the information, means that the associated information relates to a job, or this is job information. For discrimination from a job the user is presently engaged in, for example, the part time job at thirteen in this case, the circle 346 may be colored differently.

This job information is set with a link 348 so that the user clicking a concerned part can obtain detailed information of this part time job through the link 348.

The schedule column in the "today' s schedule" is siwtchable to "a diary" form image. Further, any character or image desired by the user may be displayed in a space other than that for today's date, namely, "November 11", and "today's schedule". A company which places an advertisement may offer such characters and images for a low price or free.

In the memorandum form, shown on the right half of the schedule display screen image 332, the telephone number of the sport club which the user has a reservation at eleven is written. Moreover, a connection button 322 for establishing connection between the client and the server to obtain the latest information from the server is provided on the right half of the schedule display screen image 332. Specifically, when the user presses the connection button 322, the PC 12 is connected to the Internet though a desired manner, such as by dialing up, for reception of the latest advertisement, job information, and so on, from the server.

A user wishing to check or update a schedule may also press this button 322. When the connection button 322 is pressed, that fact is informed to the user activated access section 104b in the schedule acquisition section 104. Even when the user does not press the connection button 322, the user's schedule and so on is acquired through the constant interval access section 104a activated according to the timer 150 in this embodiment.

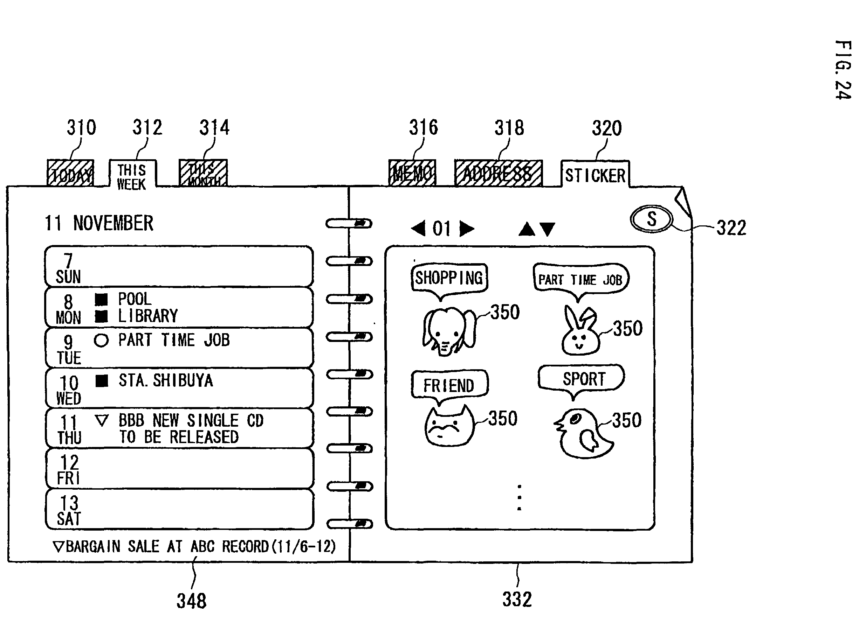

Fig. 24 is a diagram showing the schedule display screen image 332 in a different state. Specifically, "this week's schedule" is displayed on the left half of the screen image, in which schedule for the week from November 7 to 13 is shown. Here again, an advertisement is shown in addition to the user's individual schedule. Specifically, an advertisement "BBB new single CD coming out" is shown in the day space for November 11. Also, outside the schedule space is displayed another advertisement "bargain sale at ABC record shop". This advertisement is set with a link 348 so that a user can access relevant information.

On the right half of the screen image, a "symbol sheet" image is displayed, in which different symbols standing for different terms concerning various activities or schedule items, including an elephant symbol 350 standing for "shopping", are shown. These symbols can be pasted in the displayed schedule to make the displayed schedule more easily understandable. The symbols are also usable as a sticker when copied on a sticker sheet. These symbols may be created by a user himself, or down-loaded for free from a company which places an advertisement and so on.

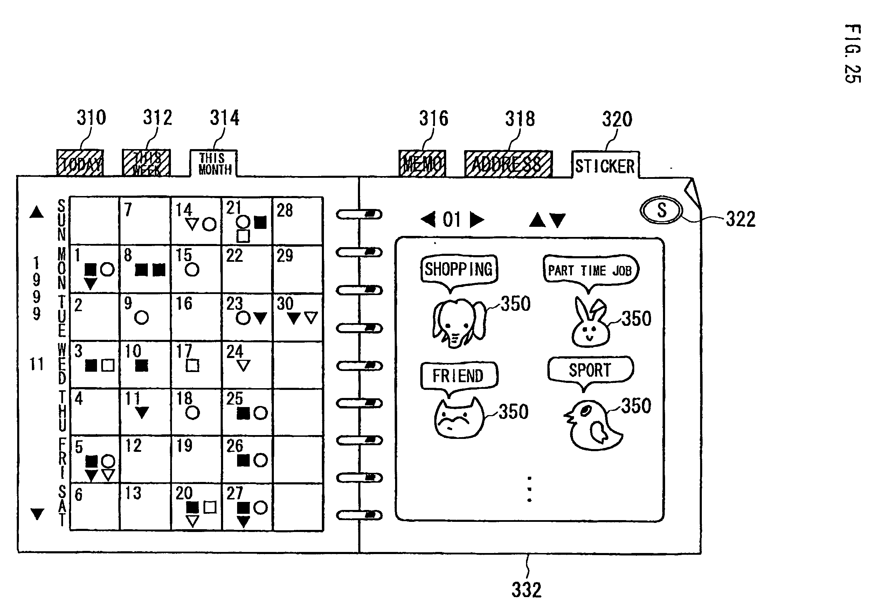

Fig. 25 is a diagram showing a schedule display screen image 332 in a further different state. Specifically, "this month's schedule" is shown on the left half image screen, where schedule during the month of November 1999 is shown. In this display, only symbols, such as rectangular, circular, and triangular ones, described earlier, are shown due to insufficient space for the description of the content of schedule. It may be constructed such that clicking any date may lead to displaying of the schedule of that day, or clicking on any symbol 342 may lead to displaying of the content of a corresponding schedule. The shape and color of each symbol can be determined as desired by each user.

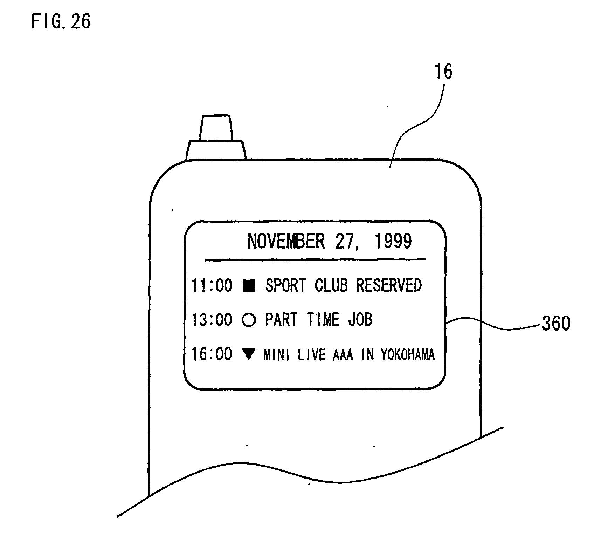

Fig. 26 is a diagram showing a screen image 360 appearing when a user attempts to check a schedule using a mobile telephone 16. This screen image 360 corresponds to the left half of the schedule display screen image 332, shown in Fig. 23. Because the display screen of a mobile phone 16 is small, either any subset image of a schedule-related screen image shown on the display of the PC 12 or a screen image dedicated to a mobile phone 16 may be displayed.

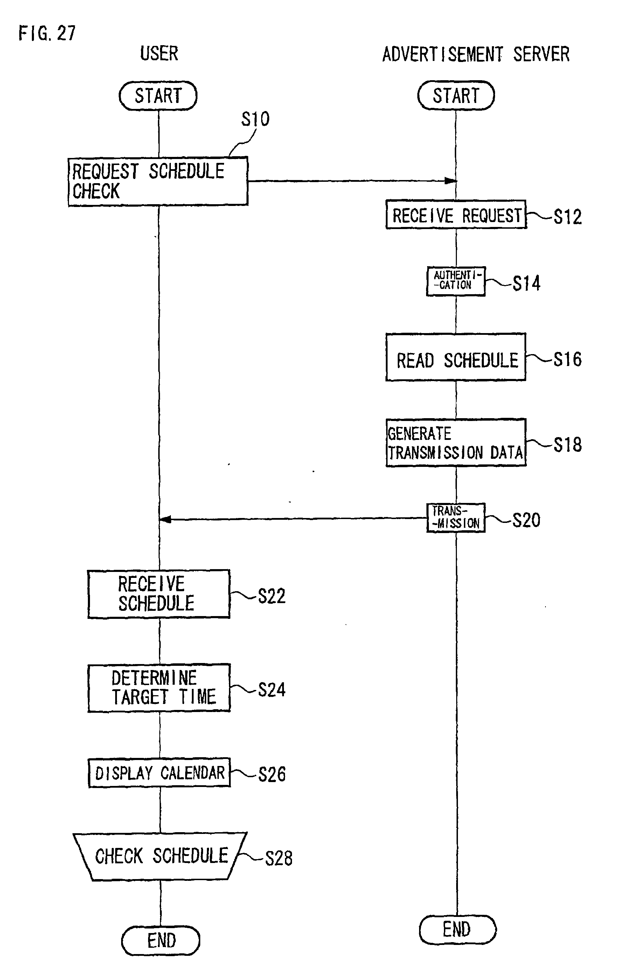

Fig. 27 is a flowchart of a procedure to be followed when a user sends a request for checking his schedule. Initially, a user sends a schedule check request using the schedule acquisition section 104 (S10). The schedule request receiving section 224 of the advertisement server 36 receives the request from the user (S12). Subsequently, the authentication section 226 authenticates the user (S14). After rightful user authentication is completed, the schedule management section 222 reads the user's schedule from the schedule database 42 (S16), which is then sent to the transmission data generation section 208. The transmission data generation section 208 generates transmission data 500 (S18), and sends the generated transmission data 500 to the transmission I/F section 202. The transmission data 500 from the transmission I/F section 202 is sent to the transmission section 200, and further to the user (S20).

The user receives the transmission data 500 using the schedule acquisition section 104 via the transmission section 162 and the transmission I/F section 112 (S22). Subsequently, the target time determination section 110 determines a target time of the schedule and, if any, that of an advertisement and job information (S24). Then, the notification control section 120 controls so as to display the schedule and other information in a calendar form (S26). Looking at the schedule and other information displayed in a calendar form, the user can check his schedule and an advertisement or job information (S28).

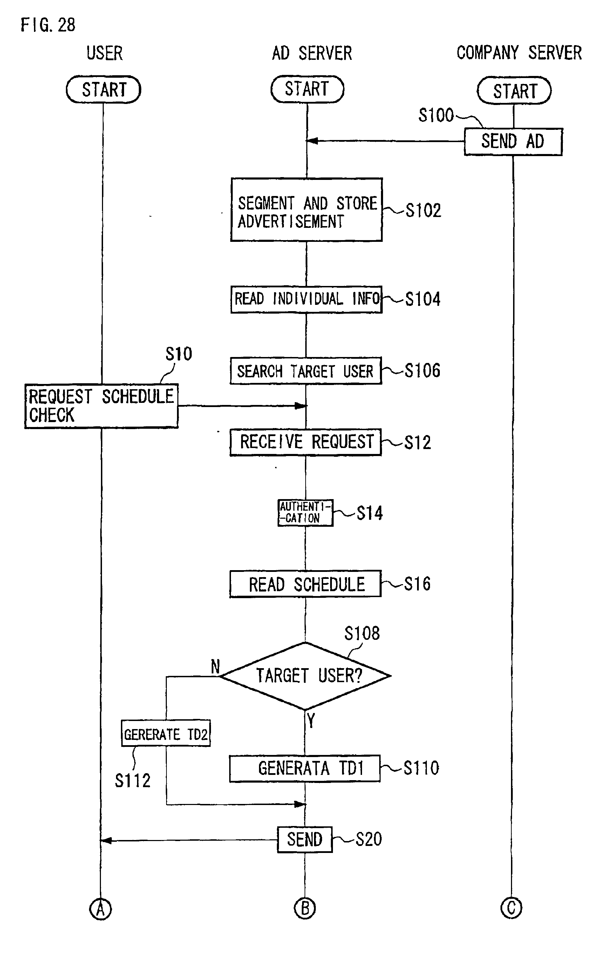

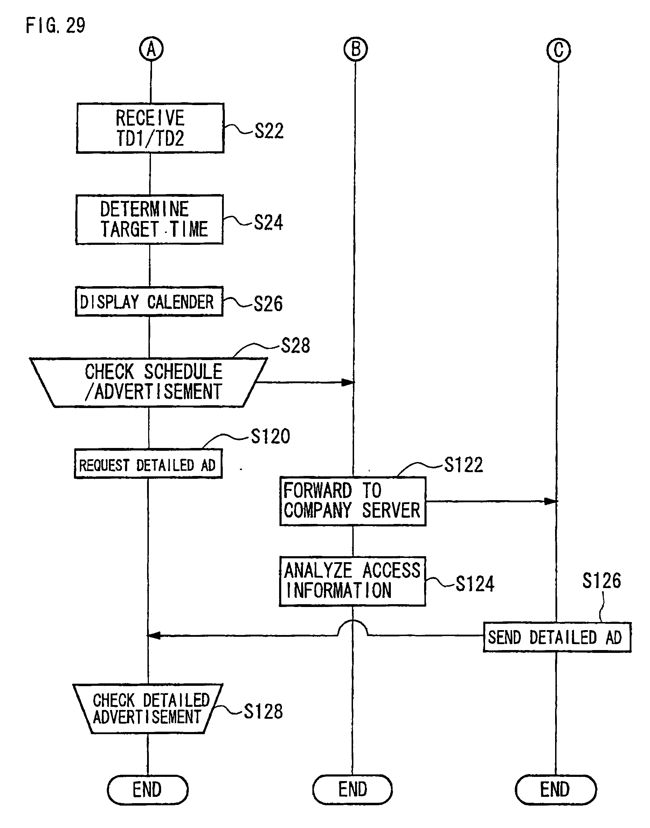

Figs. 28 and 29 are flowcharts of a procedure for additionally displaying an advertisement when displaying a schedule so that the user can check the schedule. As a preparation before actual distribution of an advertisement to a user, the company server 52 sends an advertisement 470 to the advertisement server 36 (S100). The advertisement server 36 segments and stores the received advertisement 470 (S102). "Segmentation" here means to impart a keyword to each advertisement so as to facilitate subsequent search for a required advertisement, though segmentation is unnecessary when an advertisement received from the company server 52 already has a keyword for classification. The advertisement 470 is stored via the advertisement management section 250 in the advertisement database 50.

Subsequently, individual user data is read from the individual information database 44 via the individual information management section 210 to conduct a search for a target user (S106) . "A target user" here means a user to whom the above mentioned advertisement should be addressed. A target user search is conducted by the search section 220 based on the individual information card 450. This completes preparation for advertisement distribution.

Suppose that a user sends a schedule check request (S10). The advertisement server 36 receives this request (S12), authenticates the user (S14), and reads the user's schedule (S16) . Thereafter, different processes are applied depending on whether or not the user having sent a schedule check request is a target user of the advertisement mentioned above (S108). For the user being a target user, not only a schedule but also the advertisement is included in transmission data 500 for generation of data TD1 (S110). Meanwhile, for the user being not a target user, data TD2 is generated which does not include the advertisement (S112) . The generated transmission data 500 is sent to the user (S20).

The user receives the transmission data 500, namely, either data TD1 or TD2 (S22). Then, a target time of the schedule and, if necessary, that of the advertisement are determined (S24). Information such as a schedule is shown in a calendar form (S26) so that the user can check the information (S28). Suppose that the user is interested in the advertisement displayed. The user requests to display relevant information, namely, detailed advertisement (S120). This request is sent via the relevant information access section 160 and then detected by the access detection section 230a of the relevant information designation section 230. The casting section 230b informs the company server 52 of the fact that the user accessed the relevant information, for provision of detailed information to the user (S122). Simultaneously, the access information analysis section 230c determines the content of the information the user accessed and, moreover, counts the number of accesses by the user to the information (S124).

The company server 52 or the company' s home page sends the requested relevant information, namely, detailed advertisement, to the user either directly or via the WWW server 34 or the advertisement server 36 (S126). The user can learn the content of the detailed advertisement received (S128).

Note that, whereas an advertisement is initially determined and a user is subsequently selected in the above, this order is reversible. That is, a user may be initially determined and an advertisement appropriate for that user may be subsequently selected. This process is achieved by the function of either the advertisement-based user detection section 220a or the user-based advertisement detection section 220b of the search section 220, shown in Fig. 18.

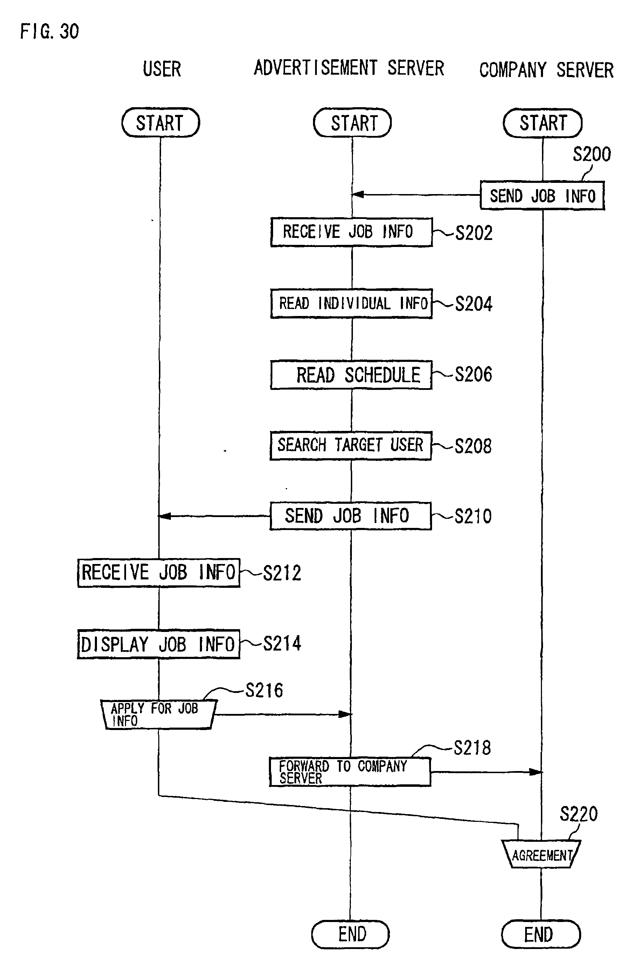

Fig. 30 is a flowchart showing a procedure for sending job information from the advertisement server 36 to a user. As a preparation before distribution of job information to a user, the company server 52 provides job information to the advertisement server 36 (S200). The job information is received by the job information receiving section 206 (S202). Subsequently, the individual information management section 210 reads individual information from the individual information database 44 (S204), which is then sent, as an individual information card 450, to the search section 220. Meanwhile, the schedule management section 222 reads the user's schedule from the schedule database 42 (S206). The schedule information is also sent to the search section 220.

The search section 220 searches for a target user (S208). Specifically, the user skill determination section 220d and the user preference determination section 220e of the job condition matching determination section 220c narrow down the candidates for a target user based on the individual information. Then, the user schedule determination section 220f selects a user having no schedule planned at the time of the target time of the job information. The transmission data generation section 208 generates transmission data 500 including the address of the target user, which is then sent to the user via the transmission I/F section 202 and the transmission section 200 (S210).

The user receives the job information sent from the advertisement server 36, in the job information acquisition section 108 (S212). The job information is first processed in the target time determination section 110 and the notification control section 120, and then displayed in a calendar form (S214) . Suppose that the user applies for the classification information received (S216). Application is made via the job information application section 114. The application is sent to the advertisement server 36, further to the job information application receiving section 240, and finally to the buffer memory 242 to be stored therein. Then, the job information application receiving section 240 informs the company server 52 of the receipt of an application, via the transmission I/F section 202 and the transmission section 200 (S218). Thereafter, an employment agreement is made between the company and the user (S220).

Note that, whereas job information is sent to a user at desired time in the above, job information may be sent to a user upon a user's attempting to check a schedule. Also, whereas job information is first determined and a user suitable for that job information is then selected in the above, a user may be first determined and job information suitable for that user may then be determined.

In the following, some modified preferred embodiments are described.

A user's birthday may be registered in advance in the terminal or a server so that a message such as "Happy Birthday" is displayed on a day space for that day. Further, a link may be set between that message and a predetermined site, so that novelty goods and so on from the site may be presented via either on or off-line processing. Still further, not only the user's but also his friends' and family members' birthdays and so on may be registered so that the user may be notified that their birthdays are coming soon with such a message displayed in a calendar on a few days before the day. Yet further, the message for notification may be linked to a site for selling goods so that the user can easily send a present to them.

A target time of job information may not be a work hour. Specifically, the schedule transmission device 14, 38 may include a time, as a target time, such as those at which various companies have presentation meetings or job interviews particularly during a job recruiting season. In this case, job information may be considered as an advertisement. A user who has registered in advance his desired job type, work place, job hour, salary, and other conditions, can timely find necessary information among an ample amount of job information. Although job information is not sent to a user having a schedule planned at the time of the target time of job information in the above embodiment, the job information may be sent also to such a user depending on a situation. The notification control section 120 of a user's schedule transmission device 14 may have a display control function for displaying such information in a different manner from that for original schedule so that the user can ascertain his original schedule prior to such information. Specifically, such information may be displayed below the original schedule, in a different or lighter color, or in a smaller size than the original schedule, and so on. In particular, a user may wish to know important information as soon as it becomes available, such as information on a time at which a company of his first choice has an interview, even though he has a schedule planned at that time. In order to meet this demand, the client device may have an option function for determining whether or not to display information of which target time falls on a time at which the user already has a schedule.

The schedule transmission device 14, 38 may handle information concerning an entrance examination and other kinds of examinations as variation of job information or an advertisement. For example, a user who has registered in advance conditions of a school he desires using an on-line questionnaire and so on may be presented with an examination schedule and so on of that school in the form of being included in his schedule. Examination related institutions or preparation schools may utilize a schedule transmission device 14, 38 to have their class curriculums to be included in a user's schedule. For an advertisement, job information, or linked information to be included in a schedule, which has a relatively large data amount, the main server 32 may reform the information before actual transmission to a user's schedule transmission device 14 via an electric mail.

Further, beside such examination-related information, a user having registered a keyword concerning his interested information using a questionnaire and so on can receive information, as an advertisement included in a schedule, uncovered in a search conducted using the keyword. For this purpose, for example, a keyword may be received in the individual information input section 116, held in the individual information management section 210 on the service side, and verified with an advertisement or a keyword in an advertisement in the search section 220. Then, information uncovered in the verification is sent as an advertisement to the user, and notified to the user according to its target time. The accounting management section 246 may set a higher unit rate for advertisement distribution to a user who registered more keywords which were uncovered in a search, for charging an advertisement fee to a company.

A target time may not necessarily be determined based on an objective factor concerning an event closely related thereto, such as a period of time when an advertised bargain sale takes place, and may rather be determined based on a subjective factor, such as a period of time during which a company wishes to expose the advertisement to a user. All the company has to do for the latter case is to request, for example, "placement of an advertisement at a time frame of 10 a.m. on October 10". With such a request, the concerned date, 10 a.m. on October 10 in this case, is used as a target time. This is similarly applied to job information. Alternatively, the schedule management section 222 on the server side may find a time and day with few or no schedule planned of a target user to whom an advertisement or job information should be addressed, and collects a company wishing to place an advertisement or job information having a target time falling on that time and day. Any advertisement thus distributed to a user is displayed in a day slot in the user' s schedule calendar displayed in the user's schedule transmission device 14. This kinds of advertisements and job information, that is, an advertisement and job information displayed to fill the vacancy in the user's schedule, may be charged less than a type of advertisement displayed outside the calendar space for notification.

As described above, whereas job information is sent to a user having no schedule at the time of the target time of a job concerning the job information in the above embodiment, a user may register in advance a time or a type of job he would like to work, using the schedule transmission device 14. That is, a user may send a sort of "counter job information", or information on a labor he can offer. For this arrangement, the schedule registration section 102 of the schedule transmission device 14 may have a function for allowing a user to input additional information concerning a time period he would like to work and other conditions into a displayed calendar. This information concerning an available labor is sent via the main server 32 to the company server 52.

The above preferred embodiment has a function for authenticating a user as an individual and that for authenticating a user as a member of a group. In addition, not only a schedule of a user himself or a group to whom the user belongs, but also a schedule of a music band, for example, of which fan club the user belongs to, may be checked. That is, a user, after completing a predetermined procedure, is allowed to check a schedule of other person or group. In this case, an entitled user may be given a special ID or password or subjected to a special accounting management. Such variation of payment is applicable also to other services offered in a preferred embodiment.

Besides authentication of a user as an individual or a member of a group, a user's designation of either "personal", "business", or "all" when inputting his schedule enables selective disclosure of the user's schedule to "his close friend", "his job colleague", or "anyone wishing to check the user' s schedule". For this purpose, the client-side schedule transmission device 14 may have a function for receiving a user's designation concerning allowance of disclosure of the user's schedule input by the user, and the schedule transmission device 38 of the server system may have a function for determining whether or not to allow a user requesting an access to other's schedule to access the requested schedule based on the designated limitation of disclosure. Alternatively, a user may set different keywords for "personal", "business", and "all" alternatives, and inform appropriate persons of these keywords. This arrangement enables common possession of a schedule among them while preserving a desired extent of limitation of disclosure. Such passwords may be stored in a memory, not shown, of each user's schedule transmission device 14 so that the user can be saved from the risk of forgetting the password.

In order to make it easier for a user to check a schedule, the schedule transmission device 38 on the server side may send the user's schedule on that day to the user via an electric mail at a predetermined time, such as, early in the morning.

The upper limit of the number of advertisements or job information pieces to be included in a user's schedule may be determined, for example, by a user to prevent a situation in which too many advertisements and so on are included in the user's calendar. In this case, when the number of advertisements and so on present in the notification control section 120, the advertisement acquisition section 106, or any other sections in the_schedule transmission device 14 reaches the upper limit, inclosure of further advertisement and so on into a schedule and so on may be suspended or discontinued.

The size of a frame for each day, week, and so on, of a calendar may be changed according to the amount of schedule information input by a user or of advertisement to be included. For example, a user having many schedules on Sundays may prefer a large frame capacity for Sundays. For this purpose, the calendar display section 124 of the notification control section 120 may have a function for determining the amount of information to be displayed and a function for variably displaying a calendar according to the amount of information.

Some schedule management programs are now available either commercially or over WWW system. A user may buy a PC having such a program installed therein. For coordination with such schedule management devices, the schedule transmission device 14 on a client side may comprise a data format conversion section for converting data so as to be adapted to importing or exporting of a user's schedule data with respect to such other schedule management devices.

News may be distributed as a variation of advertisement. For example, the news headline at 8 p.m. on April 27, 2000 may be included in a corresponding day space in the user's schedule. In this case, the target time determination section 110 may handle a time associated with the news as a target time, such as a time at which the news was distributed or an event concerning the news, such as an earthquake, occurred.

In the schedule transmission device 14 on the client side, the schedule registration section 102, for example, may have a function for allowing a user to write a schedule having a deadline in his schedule. For example, a user having a report to submit by May 10 may write a note "report submission" in a day space for May 10 in his schedule with designation of the attribute of this schedule item, namely, "with a deadline" here. When it comes toapredetermineddate, suchasMay4, or a weekbefore the deadline, with this note remaining without being erased by the user, the timer 150 and the notification control section 120 may cooperatively warn the user.

The location of a person desired by a user would like to locate may be recorded in a schedule calendar. For example, the user wishing to know his child's location may use a location function of a PHS terminal carried by the child to locate him at a predetermined time measured using a timer 150, so that the child's activities can be recorded in the user's or the child's calendar. For this purpose, the transmission section of the schedule transmission device 14, 38 may have a function for receiving a location result, and the target time determination section 110 may have a function for determining a time at which the target, or the child in this case, is present at that location, as a target time.

The transmission section may automaticallylocate the user himself to record his location in his calendar. In this case, the user can automatically complete a diary on his activities as a log file. The user may use a GPS system to locate himself.

Weather forecast may be included as an advertisement and displayed in a corresponding day space in a calendar. Specifically, a symbol "fine" may be displayed in a space for May 5, or weather forecast, which varies from one minute to the next, may be described in a detailed schedule space for the day of May 5 by displaying a symbol "fine" in a space for 10 a.m. and a symbol "cloudy" in a space for 3 p.m., for example. Displaying of a sponsor name in small in the vicinity of these marks may create an effect equivalent to placement of advertisement. Note that distribution of this type of information, such as weather forecast, which varies depending on a region relies on a user's address registered. Alternatively, the main server 32 may interpret the name of a place written by the user in his schedule and prepares a note, such as "fine in Yokohama". Still alternatively, a user's schedule transmission device 14 may be provided with a separate location device, so that the main server 32 can provide a note prepared according to the user's location.

Similar to weather information, continuously varying any information, such as stock price, market index, and so on, may be selected according to the user's registered content, and concerned information available at times may be displayed being included in a calendar. In this case, information, such as stock price, may be considered as an advertisement, and a time at which the stock price becomes of that price or is distributed may be considered as a target time. This service also allows a sponsor to display its name, and allows a user to readily follow a varying price of a stock he is interested in. That is, this service is remarkably beneficial for both a user and a sponsor.

Information may be segmented before inclusion into a calendar. Segmentation here means information classification not only according to the content or genre thereof but also according to a type of users to whom each information should address. That is, segmentation here includes information classification based on a subjective factor as well as an objective factor.

Specifically, segmentation may be made based on objective factors, such as sport, travel, movie, restaurant, and so on, as well as subjective factors, such as young person, man, and so on.

For example, a note "restaurant" alone may be included in a calendar and a link may be set between the note and various restaurant-related sites on the Internet, including an intensive site or page (hereinafter referred to as an intensive point), such as "a restaurant portal site", or a kind of list of restaurants, which is available for every information item. Distribution and displaying of segmented information under a single title are significantly advantageous to a user due to the relatively small date column of a calendar displayed in a schedule transmission device 14 actually employed in the preferred embodiment. Moreover, this method allows the user to compare products of similar kinds for consideration.

The concept of target time can be utilized also in title distribution. For example, a title may be displayed in a day space in a calendar, where no other information is displayed. For this purpose, the target time of other information may be checked in advance so that a time and day with no or few notes of other information written in a space thereof can be used as a target time of the title. This method concerning target time selection can be utilized for any purposes other than title distribution.

A date relative to a title may be used as a target time in distribution of that title. Specifically, for a mother's day, the server may collect various information items having a title including the term "mother". By clicking the title, a user can access such information items concerning "mother" or a relevant incentive point concerning "mother"-related information items via on-line processing to review necessary information.

In addition to the above, various other information including medical information and information concerning real estates, trading, fortune, travel, hobby, and so on, can be distributed in the form of a title. That is, present invention can be applied to a wide variety of ranges.

## Claims

1. A schedule transmission method for a network system, comprising:
receiving a user's schedule via a network;
receiving an advertisement selected as matching with the user's preference;
determining a target time of the advertisement; and
notifying the user of the advertisement in a manner of being included in the user's schedule according to the target time of the advertisement.

2. A method according to claim 1, further comprising registering the user's schedule.

3. A method according to claim 1, wherein at least one of the step of receiving a user's schedule and the step of receiving an advertisement is regularly executed with a timer.

4. A method according to claim 1, further comprising sending by the user individual information via the network, so that the advertisement is selected based on the individual information.

5. Amethod according to claim 1, further comprising accessing, via the network, relevant information of the advertisement selected, so that the advertisement is selected based on content of the relevant information accessed.

6. A method according to claim 5, wherein the advertisement is selected based on frequency of an access to the relevant information.

7. A method according to claim 1, further comprising receiving job information via the network.

8. A method according to claim 7, wherein the job information is receivable only by a user selected in advance.

9. A method according to claim 8, wherein a user having a schedule suitable for the target time of the job information is selected.

10. A method according to claim 9, wherein a user having no schedule planned a time of the target time of the job information is selected.

11. A method according to claim 8, further comprising sending by the user individual information via the network, so that a user whose individual information matches with condition of the job information is selected.

12. Amethod according to claim 8, further comprising accessing relevant information of the advertisement selected via the network, so that the user is selected based on the relevant information accessed.

13. A method according to claim 1, wherein
at the step of notifying, the advertisement is included into a display of schedule in a corresponding month when the target time is expressed in units of month, into a display of schedule in a corresponding week when the target time is expressed in units of week, or into a display of schedule in a corresponding day when the target time is expressed in units of day.

14. A schedule transmission method for a network system, comprising:
receiving a user's schedule via a network;
receiving job information via the network;
determining a target time of the job information; and
notifying the user of the user's schedule and the job information in a manner that the user's schedule and the job information are correlated to each other according to the target time.

15. A method according to claim 14, wherein the job information is receivable only by a user selected in advance.

16. A method according to claim 15, wherein a user having a schedule suitable for the target time of the job information is selected.

17. A method according to claim 15, further comprising sending by the user individual information via the network, so that a user whose individual information matches with condition of the job information is selected.

18. Amethod according to claim 14, further comprising receiving an advertisement via the network,
wherein at the step of determining, a target time of the advertisement is determined, and
at the step of notifying, the user's schedule and the advertisement are notified to the user in a manner that the user's schedule and the advertisement are correlated to each other according to the target time.

19. A schedule transmission method for a network system, comprising:
sending a schedule to a user via a network;
selecting an advertisement matching with the user's preference; and
sending the advertisement selected to the user after adding a target time to the advertisement, the target time being referred to when including the advertisement into the schedule.

20. A method according to claim 19, further comprising generating accounting information according to a number of advertisements sent to the user.

21. A method according to claim 19, further comprising sending job information via the network.

22. A method according to claim 21, further comprising selecting a user in advance to which the job information is to be sent.

23. A method according to claim 19, further comprising registering a schedule of the user.

24. A method according to claim 21, further comprising generating accounting information according to a number of pieces of the job information sent to the user.

25. A method according to claim 19, wherein
at the step of selecting, a user whose preference matches with the advertisement is selected instead of selecting an advertisement matching with the user's preference, so that the advertisement is sent to the user selected.

26. A method according to claim 25, further comprising generating accounting information according to a number of users selected.

27. A schedule transmission method for a network system, comprising:
sending a schedule to a user via a network;
selecting job information to be sent to the user;
sending the job information selected to the user after adding a target time to the job information, the target time being referred to when making the job information correlated with the schedule.

28. A method according to claim 27, further comprising selecting in advance a user to whom the job information is to be sent.

29. Amethodaccordingtoclaim27, further comprising acquiring an advertisement to be correlated with the schedule,
wherein,
at the step of sending the job information, the advertisement is sent via the network.

30. A schedule transmission method for a network system including a server and a client on a side of a user, comprising:
sending a schedule from the server to the user;
receiving the schedule on the side of the user;
selecting by the server an advertisement matching with preference of the user;
sending the advertisement selected, from the server to the user;
determining a target time of the advertisement on the side of the user; and
notifying the advertisement to the user in a manner of being included into the schedule according to the target time on the side of the user.

31. A schedule transmission method for a network system including a server and a client on a side of a user, comprising:
sending a schedule from the server to the user;
receiving the schedule on the side of the user;
selecting by the server job information to be sent to the user;
sending the job information selected, from the server to the user;
receiving the job information on the side of the user;
determining a target time of the job information on the side of the user; and
notifying the job information to the user in a manner of being correlated to the schedule according to the target time on the side of the user.

32. A schedule transmission device for a network system, comprising:
a unit for acquiring a user's schedule via a network;
a unit for acquiring, via the network, an advertisement selected as matching with preference of the user;
a unit for determining a target time of the advertisement;
a notification control unit for notifying the advertisement to the user in a manner of being included into the schedule according to the target time.

33. An apparatus according to claim 32, wherein at least one of the unit for acquiring a user's schedule and the unit for acquiring an advertisement regularly conducts acquisition processing with a timer.

34. An apparatus according to any one of claims 32 and 33, further comprising a unit for inputting by the user individual information, so that the advertisement is selected based on the individual information.

35. An apparatus according to claim 33, further comprising a unit for acquiring job information via the network.

36. An apparatus according to claim 35, wherein the job information is receivable only by a user selected in advance.

37. An apparatus according to claim 32, wherein the notification control unit includes a calendar display section, and the calendar display section comprises
a month display section for including the advertisement into a display of a schedule in a corresponding month the target time is expressed in units of month,
a week display section for including the advertisement into a display of a schedule in a corresponding week when the target time is expressed in units of week, and
a day display section for including the advertisement into a display of a schedule in a corresponding day when the target time is expressed in units of day.

38. An apparatus according to claim 32, further comprising a unit for registering the user's schedule.

39. A schedule transmission device for a network system, comprising:
a unit for acquiring a user's schedule via a network;
a unit for acquiring job information via the network;
a unit for determining a target time of the job information;
a notification control unit for notifying the user of the job information in a manner of being correlated to the user's schedule according to the target time.

40. An apparatus according to claim 39, wherein the job information is receivable only by a user selected in advance

41. A schedule transmission device for a network system, comprising:
a schedule management unit for reading a schedule to be sent to a user via a network;
a search unit for selecting an advertisement matching with preference of the user; and
a unit for generating data to be sent to the user by adding a target time to the advertisement selected, the target time being referred to when including the advertisement into the schedule.

42. An apparatus according to claim 41, further comprising a relevant information designation unit for conducting a process allowing the user to access relevant information of the advertisement selected.

43. An apparatus according to claim 42, wherein the relevant information designation unit has a unit for determining content of the relevant information accessed, so that the advertisement is selected based on the content.

44. An apparatus according to claim 42, wherein the relevant information designation unit has a unit for counting a number of accesses to the relevant information, so that the advertisement is selected based on the number.

45. An apparatus according to claim 41, wherein the unit for generating data additionally generates data for sending job information via the network.

46. An apparatus according to claim 45, wherein the search unit has a job condition matching determination section for selecting a user to whom the job information is to be sent.

47. An apparatus according to claim 46, wherein the job condition matching determination section has a user schedule determination section for comparing a target time of the user's schedule and a target time of the job information.

48. An apparatus according to claim 47, wherein the user schedule determination section selects a user having no schedule planned at a time of the target time of the job information.

49. An apparatus according to claim 46, further comprising a unit for acquiring the user's individual information via the network, wherein the job condition matching determination section selects a user whose individual information matches with condition of the job information.

50. An apparatus according to claim 49, wherein the job condition matching determination has a user skill determination section for selecting a user having a skill matching with condition concerning a skill mentioned in the job information.

51. An apparatus according to claim 49, wherein the job condition matching determination section has a user preference determination section for selecting a user having preference matching with a genre of the job information.

52. An apparatus according to claim 41, further comprising a accounting management unit for generating accounting information according to a process conducted by the search unit.

53. An apparatus according to claim 41, wherein the search unit selects a user having preference matching with the advertisement, instead of selecting an advertisement matching with preference of the user, so that the data is generated for the user selected.

54. An apparatus according to claim 53, further comprising an accounting management unit for generating accounting information according to a number of users selected by the search unit.

55. A schedule transmission device for a network system, comprising:
a schedule management unit for reading a schedule to be sent to a user via a network;
a search unit for selecting job information to be sent to the user; and
a unit for generating data to be sent to the user by adding a target time to the job information selected, the target time being referred to when making the job information correlated to the schedule.

56. An apparatus according to claim 55, further comprising a unit for acquiring an advertisement to be correlated to the schedule, wherein the unit for generating data generates the data including the advertisement acquired.

57. A schedule transmission system for a network system including a server system and a client on a side of a user,
wherein
the server system comprises
a unit for sending a schedule to the user;
a unit for selecting an advertisement matching with the user's preference; and
a unit for sending the advertisement selected to the user; and
the client comprises
a unit for receiving the schedule;
a unit for receiving the advertisement;
a unit for determining a target time of the advertisement; and
a notification control unit for notifying the user of the advertisement in a manner of being included into the schedule according to the target time.

58. A schedule transmission system according to claim 57, wherein the server system further comprises a WWW server serving as a front server for communicating with the client via the Internet; and an advertisement server for extracting the schedule and the advertisement according to content of communication with the client to forward to the WWW server.

59. A schedule transmission system for a network system including a server system and a client on a side of a user, wherein the server system comprises:
a unit for sending a schedule to the user;
a unit for selecting job information to be sent to the user; and
a unit for sending the job information selected to the user; and the client comprises:
a unit for receiving the schedule;
a unit for receiving the job information;
a unit for determining a target time of the job information; and
a notification control unit for notifying the user of the schedule and the job information in a manner that the schedule and the job information are correlated to each other according to the target time.

60. A schedule transmission system according to claim 59, wherein the server system further comprises
a WWW server serving as a front server for communicating with the client via the Internet; and
an advertisement server for extracting the schedule and the job information according to content of communication with the client to forward to the WWW server.

61. A medium recording a schedule transmission method for a network system, as a program capable of being executed on a computer, the medium recording a program comprising:
receiving a user's schedule via a network;
receiving an advertisement selected as matching with the user's preference;
determining a target time of the advertisement; and
notifying the user of the advertisement in a manner of being included in the user's schedule according to the target time of the advertisement.

62. A medium recording a schedule transmission method for a network system, as a program capable of being executed on a computer, the medium recording a program comprising:
receiving a user's schedule via a network;
receiving job information via the network;
determining a target time of the job information; and
notifying the user of the user's schedule and the job information in a manner that the user's schedule and the job information are correlated to each other according to the target time.

63. A method according to claim 8, wherein
a user whose schedule does not match with a target time of the job information, is selected, and
the job information is notified to the user selected in a manner that the user is able to ascertain the user's schedule prior to the job information.

64. A method according to claim 4, wherein the individual information is sent in a form of a keyword indicative of information in which the user will be interested.

65. A method according to claim 17, wherein the individual information is received in a form of a keyword indicative of information the user is interested in.

66. A method according to claim 65, wherein, when an advertisement uncovered in a search using the keyword is sent, accounting information according to a state of uncovering is generated.

67. A method according to claim 1, further comprising sending information on an offerable labor, via the network, wherein the information is forwarded to companies participating the network system.

68. Amethod according to claim 1, further comprising receiving relevant information of the advertisement selected, in a form of an electric mail via the network.

69. A method according to claim 14, further comprising receiving relevant information of the job information, in a form of an electric mail via the network.

70. A method according to claim 1, further comprising setting in advance an upper limit of a number of advertisements to be included in the user's schedule, so that, when that number of advertisements have been included in the user's schedule, notification of more advertisements is suspended or discontinued.

71. A method according to claim 14, further comprising setting in advance an upper limit of a number of job information pieces to be included in the user's schedule, so that, when that number of pieces of job information have been included in the user's schedule, notification of more pieces of job information is suspended or discontinued.

72. A method according to claim 1, further comprising locating the user or a person desired by the user, so that information indicative of a place located is included in a display of the user' s schedule in a manner of being correlated to a time at which that person is present at that time.

73. A method according to claim 1, further comprising notifying information which varies over time in a manner of being included in the user's schedule.

74. A method according to claim 73, wherein
the information which varies over time is shown in a manner of being included in a display of the user's schedule, and
a name of a sponsor offering the information is shown in a vicinity of the information.

75. A method according to claim 1, wherein the target time is determined based on a subjective factor.

76. A method according to claim 1, further comprising:
determining a time and day when the user has relatively few schedule; and
setting the time and day determined as the target time.

77. A schedule transmission method for a network system, comprising:
receiving a user's schedule via a network;
receiving a title of information segmented via the network;
determining a target time of the title received; and
notifying the title to the user in a manner of being included in the user's schedule according to the target time.

78. A schedule transmission method for a network system, comprising the step of:
sending a schedule to a user via a network;
selecting a title of information segmented; and
sending the title selected to the user after adding a target time to the title, the target time being referred to when including the title into the schedule.

79. A schedule transmission method for a network system including a server and a client on a side of a user, comprising:
sending a schedule from the server to the user;
receiving the schedule on the side of the user;
selecting by the server a title of information segmented;
sending the title selected, from the server to the user;
determining a target time of the title on the side of the user; and
notifying the user of the title in a manner of being including into the schedule according to the target time on the user side.

80. A method according to claim 77, wherein the title is set with an electrical link to an item indicative of the information segmented, so that the item indicative of the information is presented to the user via on-line processing in response to the user clicking the title.

81. A method according to claim 78, wherein the title is set with an electrical link to an item indicative of the information segmented, so that the item indicative of the information is presented to the user via on-line processing in response to the user clicking the title.

82. A method according to claim 79, wherein the title is set with an electrical link to an item indicative of the information segmented, so that the item indicative of the information is presented to the user via on-line processing in response to the user clicking the title.

83. A method according to claim 80, wherein there is formed an intensive point for intensively presenting the item indicative of the information to the user, at other end of the electric link.

84. A method according to claim 81, wherein there is formed an intensive point for intensively presenting the item indicative of the information to the user, at other end of the electric link.

85. A method according to claim 82, wherein there is formed an intensive point for intensively presenting the item indicative of the information to the user, at other end of the electric link.

86. A schedule transmission system for a network system including a server system and a client on a side of a user, wherein the server system comprises:
a unit for sending a schedule to the user;
a unit for selecting a title of information segmented to be sent to the user; and
a unit for sending the title selected to the user; and the client comprises:
a unit for receiving the schedule;
a unit for receiving the title;
a unit for determining a target time of the title; and
a notification control unit for notifying the user of the title in a manner of being correlated to the schedule according to the target time.

87. A system according to claim 86, wherein the title is set with an electrical link to an item indicative of the information segmented, so that the item indicative of the information is presented to the user via on-line processing in response to the user clicking the title.

88. A system according to claim 87, wherein there is formed an intensive point for intensively presenting the item indicative of the information to the user, at other end of the electric link.

89. A medium recording a schedule transmission method for a network system, as a program capable of being executed on a computer, the medium recording a program comprising:
receiving a schedule of a user via a network;
receiving the title of information segmented via the network;
determining a target time of the title; and
notifying the user of the title in a manner of being included into the schedule according to the target time.
